# EUROPEAN PATENT APPLICATION

(11) **EP 4 783 621 A1**
(43) Date of publication of application: **29.07.2026**
(21) Application number: 24870156.7
(22) Date of filing: 12.08.2024
(51) Int. Cl.: H04W 4/029

(54) **COMMUNICATION METHOD AND APPARATUS, AND SYSTEM**

(30) Priority: 28.09.2023 CN 202311281489
(71) Applicant: HUAWEI TECHNOLOGIES CO., LTD., Shenzhen 518129 (CN)
(72) Inventor: ZHU, Fangyuan, Shenzhen, Guangdong 518129 (CN); YING, Jiangwei, Shenzhen, Guangdong 518129 (CN)
(74) Representative: Gill Jennings & Every LLP
(86) International application number: PCT/CN2024/111506
(87) International publication number: WO 2025/066608

(57) **Abstract**

This application relates to a communication method and apparatus, and a system. A first core network device determines, based on a first location at which a target object is located, a first sensing device and a second sensing device to sense the target object. The first sensing device is a sensing signal transmit side, and the second sensing device is a sensing signal receive side. When the target object moves from the first location to a second location, the first core network device determines a target sensing device based on the second location. The target sensing device includes a third sensing device and/or a fourth sensing device. The third sensing device is a new sensing signal transmit side, and the fourth sensing device is a new sensing signal receive side. The first core network device triggers the target sensing device to sense the target object. Even if the target object moves, in embodiments of this application, the target object can still be continuously sensed, so that a probability of sensing interruption is reduced, information about the target object can be obtained in time, and continuity and a success rate of sensing the target object are improved.

## Description

### CROSS-REFERENCE TO RELATED APPLICATIONS

This application claims priority to Chinese Patent Application No. 202311281489.X, filed with the China National Intellectual Property Administration on September 28, 2023 and entitled "COMMUNICATION METHOD AND APPARATUS, AND SYSTEM", which is incorporated herein by reference in its entirety.

### TECHNICAL FIELD

This application relates to the field of communication technologies, and in particular, to a communication method and apparatus, and a system.

### BACKGROUND

With development of 5th generation (5th generation, 5G) networks, requirements for new sensing-based network capabilities are gradually emerging. For example, in scenarios such as a smart city and smart transportation, requirements for obtaining relative locations and angles between objects and sensing information such as a location, a speed, and a shape of a target object gradually emerge. To meet these service requirements, the 5G network needs to be further enhanced to have a capability of assisting a wireless network in sensing. In a future 5G network, an integrated sensing and communication base station may be deployed to enhance a capability of the base station of sensing a physical world. In addition, a 5G terminal may also have a sensing capability, to sense a surrounding environment or object.

A sensing device can perform sensing within a limited range. For example, a sensing device senses a target, and the sensing device does not move. However, if the target leaves a sensing area of the sensing device, the sensing device can no longer sense the target. It can be learned that, because the target moves, the target may leave the current sensing area of the sensing device, and consequently cannot be sensed by the sensing device.

### SUMMARY

Embodiments of this application provide a communication method and apparatus, and a system, to improve a success rate of sensing a target.

According to a first aspect, a first communication method is provided. The method may be performed by a first core network, or may be performed by a chip system. The chip system can implement a function of the first core network device. The first core network device is, for example, an SF. The method includes: determining, based on a first location at which a target object is located, a first sensing device and a second sensing device to sense the target object, where the first sensing device is a sensing signal transmit side, and the second sensing device is a sensing signal receive side; when the target object moves from the first location to a second location, determining a target sensing device based on the second location, where the target sensing device includes a third sensing device and/or a fourth sensing device, the third sensing device is a new sensing signal transmit side, and the fourth sensing device is a new sensing signal receive side; and triggering the target sensing device to sense the target object.

In this embodiment of this application, when the target object changes from the first location to the second location, the target object may have left or is about to leave a sensing area of the original sensing device (the first sensing device and/or the second sensing device). In this case, the first core network device may determine a new sensing device, namely, the target sensing device, based on a new location (the second location) of the target object, so that the target sensing device can continue to sense the target object. In this way, even if the target object moves, in this embodiment of this application, the target object can still be continuously sensed, so that a probability of sensing interruption is reduced, information about the target object can be obtained in time, and continuity and a success rate of sensing the target object are improved.

In an optional implementation, the first location is located within a sensing range of the first sensing device and/or a sensing range of the second sensing device. The first location is located within the sensing range of the first sensing device and/or the sensing range of the second sensing device. Therefore, the first sensing device and the second sensing device may initially sense the target object.

In an optional implementation, the second location is located within a sensing range of the target sensing device. The first location is located within the sensing range of the target sensing device. Therefore, the target sensing device may sense the target object.

In an optional implementation, the method further includes: receiving sensing information of the target object from the second sensing device; and determining the second location based on the sensing information. For example, after obtaining the sensing information, the second sensing device may send the sensing information to the first core network device, so that the first core network device can determine a location of the target object after movement. The SF tracks the target object, and the sensing device does not need to determine a parameter of the target object, so that implementation of the sensing device can be simplified.

**In** an optional implementation, triggering the target sensing device to sense the target object includes: when the target sensing device includes the third sensing device, sending first indication information to the third sensing device, where the first indication information is used to trigger the target sensing device to sense the target object, and the first indication information indicates one or more of the following: the third sensing device being a sensing signal transmit side, an identifier of the fourth sensing device, the fourth sensing device being a sensing signal receive side, or the second location; or when the target sensing device includes the third sensing device, sending first indication information to the third sensing device, where the first indication information is used to trigger the target sensing device to sense the target object, and the first indication information indicates one or more of the following: the third sensing device being a sensing signal transmit side, an identifier of the second sensing device, the second sensing device being a sensing signal receive side, or the second location; or when the target sensing device includes the third sensing device, sending first indication information to the third sensing device, where the first indication information is used to trigger the target sensing device to sense the target object, and the first indication information indicates one or more of the following: the third sensing device being a sensing signal transmit side, an identifier of the first sensing device, the first sensing device being a sensing signal receive side, or the second location. The first core network device may re-determine the sensing signal transmit side (for example, the third sensing device) and the sensing signal receive side (for example, the fourth sensing device). In this case, the third sensing device may replace the first sensing device, and the fourth sensing device may replace the second sensing device. Alternatively, the first core network device may re-determine the sensing signal transmit side (for example, the third sensing device), and the target object is still in the sensing area of the second sensing device. Therefore, the second sensing device may continue to sense the target object as the sensing signal receive side. In this way, a quantity of sensing devices newly determined by the first core network device is reduced, and the original sensing device may continue to sense the target object, thereby improving continuity of a sensing process. Alternatively, the target object is still in the sensing area of the first sensing device, and the first core network device may switch a role of the first sensing device to the sensing signal receive side. In this case, the first core network device may re-determine the sensing signal transmit side. For example, the first sensing device is a device with a strong capability, and serves as the sensing signal receive side. This helps improve continuity and accuracy of the sensing process.

In an optional implementation, triggering the target sensing device to sense the target object includes: when the target sensing device includes the fourth sensing device, sending second indication information to the fourth sensing device, where the second indication information is used to trigger the target sensing device to sense the target object, and the second indication information indicates one or more of the following: the fourth sensing device being a sensing signal receive side, an identifier of the third sensing device, the third sensing device being a sensing signal transmit side, or the second location; or when the target sensing device includes the fourth sensing device, sending second indication information to the fourth sensing device, where the second indication information is used to trigger the target sensing device to sense the target object, and the second indication information indicates one or more of the following: the fourth sensing device being a sensing signal receive side, an identifier of the first sensing device, the first sensing device being a sensing signal transmit side, or the second location; or when the target sensing device includes the fourth sensing device, sending second indication information to the fourth sensing device, where the second indication information is used to trigger the target sensing device to sense the target object, and the second indication information indicates one or more of the following: the fourth sensing device being a sensing signal receive side, an identifier of the second sensing device, the second sensing device being a sensing signal transmit side, or the second location. The first core network device may re-determine the sensing signal transmit side (for example, the third sensing device) and the sensing signal receive side (for example, the fourth sensing device). In this case, the third sensing device may replace the first sensing device, and the fourth sensing device may replace the second sensing device. Alternatively, the first core network device may re-determine the sensing signal receive side (for example, the fourth sensing device), and the target object is still in the sensing area of the first sensing device. Therefore, the first sensing device may continue to sense the target object as the sensing signal transmit side. In this way, the quantity of sensing devices newly determined by the first core network device is reduced, and the original sensing device may continue to sense the target object, thereby improving continuity of the sensing process. Alternatively, the target object is still in the sensing area of the second sensing device, and the first core network device may switch a role of the second sensing device to the sensing signal transmit side. In this case, the first core network device may re-determine the sensing signal receive side. For example, the first sensing device is a device with a weak capability, and serves as the sensing signal receive side, and the fourth sensing device with a strong capability is reselected as the sensing signal receive side. This helps improve continuity and accuracy of the sensing process.

In an optional implementation, determining the target sensing device based on the second location includes: sending a first request to a second core network device, where the first request is used to request information about a sensing device, and the first request includes the information about the second location, and receiving a first response from the second core network device, where the first response includes the information about the target sensing device; or determining the target sensing device based on the second location and capability information that is of at least one sensing device and that is stored in the first core network device, where the at least one sensing device includes the target sensing device. The first core network device may request the second core network device to determine the target sensing device, or the first core network device may determine the target sensing device. A manner is flexible.

In an optional implementation, the method further includes: receiving capability information of at least one sensing device, where capability information of one sensing device in the at least one sensing device indicates one or more of the following: a location of the sensing device, a sensing area of the sensing device, a parameter that is capable of being sensed by the sensing device, or information indicating that the sensing device is capable of serving as the sensing signal transmit side and/or the sensing signal receive side. The at least one sensing device includes the third sensing device and the fourth sensing device. For example, the at least one sensing device may send the capability information of the at least one sensing device to the first core network device, so that the first core network device can determine the target sensing device based on the capability information of the at least one sensing device.

In an optional implementation, determining the target sensing device based on the second location includes: determining the target sensing device based on a movement trajectory of the target object, where the target object is currently located at the second location in the movement trajectory. The first core network device may determine the movement trajectory of the target object. For example, the first core network device receives the sensing information from the second sensing device, and can determine the movement trajectory of the target object based on the sensing information, so that the target sensing device can be determined based on the movement trajectory.

In an optional implementation, the method further includes: receiving a second request from an application server, where the second request is used to request to sense the target object, and the second request includes information about the first location.

In an optional implementation, when the target sensing device includes the fourth sensing device, the method further includes: triggering the second sensing device to sense the target object, where the second sensing device is updated from the sensing signal receive side to the sensing signal transmit side; or when the target sensing device includes the third sensing device, the method further includes: triggering the first sensing device to sense the target object, where the first sensing device is updated from the sensing signal transmit side to the sensing signal receive side. For example, the first core network device reselects only one of the sensing devices, and an original sensing device continues to be used as the other sensing device. In this case, the first core network device may trigger the original sensing device that continues to be used, so that the sensing device can continue to sense the target object, and the original sensing device may further change a role.

In an optional implementation, when the target sensing device includes the fourth sensing device, the method further includes: sending tenth indication information to the first sensing device, where the tenth indication information indicates one or more of the following: the second location, the identifier of the fourth sensing device, the first sensing device being a sensing signal transmit side, or the fourth sensing device being a sensing signal receive side. For example, the first core network device reselects only one of the sensing devices, and the original sensing device continues to be used as the other sensing device. In this case, the first core network device may send information about a new sensing device to the original sensing device that continues to be used, so that the sensing device can cooperate with the new sensing device.

In an optional implementation, when the target sensing device includes the third sensing device, the method further includes: sending eighth indication information to the second sensing device, where the eighth indication information indicates one or more of the following: the second location, the identifier of the third sensing device, the third sensing device being a sensing signal transmit side, or the second sensing device being a sensing signal receive side.

For example, the first core network device reselects only one of the sensing devices, and the original sensing device continues to be used as the other sensing device. In this case, the first core network device may send information about a new sensing device to the original sensing device that continues to be used, so that the sensing device can cooperate with the new sensing device.

In an optional implementation, the method further includes: sending third indication information to the first sensing device and/or the second sensing device, where the third indication information indicates to stop sensing the target object. If a sensing device no longer needs to sense the target object, the first core network device may send the third indication information to the sensing device, so that the sensing device may stop a sensing process, to reduce power consumption.

According to a second aspect, a second communication method is provided. The method may be performed by a first sensing device, or may be performed by a chip system. The chip system can implement a function of the first sensing device. The method includes: sending a first sensing signal to a target object located at a first location, where the first sensing signal is used by the first sensing device and a second sensing device to sense the target object, the first sensing device is a sensing signal transmit side, and the second sensing device is a sensing signal receive side; receiving a third request, where the third request is used to trigger the first sensing device to select a target sensing device, and the third request includes information about a second location of the target object after movement; determining the target sensing device based on the second location, where the target sensing device includes a third sensing device and/or a fourth sensing device, the third sensing device is a new sensing signal transmit side, and the fourth sensing device is a new sensing signal receive side; and triggering the target sensing device to sense the target object, or sending a response to the third request to the second sensing device, where the response indicates the target sensing device. Optionally, the third request is from the second sensing device.

In this embodiment of this application, when the target object changes from the first location to the second location, the target object may have left or is about to leave a sensing area of an original sensing device (the first sensing device and/or the second sensing device). In this case, the first sensing device may determine a new sensing device, namely, the target sensing device, based on a new location (the second location) of the target object, so that the target sensing device can continue to sense the target object. In this way, even if the target object moves, in this embodiment of this application, the target object can still be continuously sensed, so that a probability of sensing interruption is reduced, information about the target object can be obtained in time, and continuity and a success rate of sensing the target object are improved. In addition, for example, the third request is from the second sensing device. In this case, the first sensing device may send the first response corresponding to the third request to the second sensing device, and may notify the second sensing device of information about the target sensing device through the first response.

In an optional implementation, determining the target sensing device based on the second location includes: determining the target sensing device based on the second location and capability information that is of at least one sensing device and that is stored in the first sensing device, where the at least one sensing device includes the target sensing device. The first sensing device may determine the target sensing device based on a current location of the target object and the capability information of the at least one sensing device, so that the target sensing device can complete a sensing process.

In an optional implementation, triggering the target sensing device to sense the target object includes: when the target sensing device includes the third sensing device, sending first indication information to the third sensing device, where the first indication information is used to trigger the target sensing device to sense the target object, and the first indication information indicates one or more of the following: the third sensing device being a sensing signal transmit side, an identifier of the fourth sensing device, the fourth sensing device being a sensing signal receive side, or the second location; or when the target sensing device includes the third sensing device, sending first indication information to the third sensing device, where the first indication information is used to trigger the target sensing device to sense the target object, and the first indication information indicates one or more of the following: the third sensing device being a sensing signal transmit side, an identifier of the second sensing device, the second sensing device being a sensing signal receive side, or the second location; or when the target sensing device includes the third sensing device, sending first indication information to the third sensing device, where the first indication information is used to trigger the target sensing device to sense the target object, and the first indication information indicates one or more of the following: the third sensing device being a sensing signal transmit side, an identifier of the first sensing device, the first sensing device being a sensing signal receive side, or the second location.

In an optional implementation, triggering the target sensing device to sense the target object includes: when the target sensing device includes the fourth sensing device, sending second indication information to the fourth sensing device, where the second indication information is used to trigger the target sensing device to sense the target object, and the second indication information indicates one or more of the following: the fourth sensing device being a sensing signal receive side, an identifier of the third sensing device, the third sensing device being a sensing signal transmit side, or the second location; or when the target sensing device includes the fourth sensing device, sending second indication information to the fourth sensing device, where the second indication information is used to trigger the target sensing device to sense the target object, and the second indication information indicates one or more of the following: the fourth sensing device being a sensing signal receive side, an identifier of the first sensing device, the first sensing device being a sensing signal transmit side, or the second location; or when the target sensing device includes the fourth sensing device, sending second indication information to the fourth sensing device, where the second indication information is used to trigger the target sensing device to sense the target object, and the second indication information indicates one or more of the following: the fourth sensing device being a sensing signal receive side, an identifier of the second sensing device, the second sensing device being a sensing signal transmit side, or the second location.

In an optional implementation, before sending the first sensing signal to the target object located at the first location, the method further includes: receiving fourth indication information from a first core network device or the second sensing device, where the fourth indication information indicates one or more of the following: the first sensing device being a sensing signal transmit side, the identifier of the second sensing device, the second sensing device being a sensing signal receive side, or the first location. For example, initially, the first core network device may select the first sensing device, so that the first sensing device can sense the target object.

In an optional implementation, the method further includes: sending capability information of the first sensing device to the first core network device or a second core network device; and/or sending the capability information of the first sensing device to one or more sensing devices, where the capability information of the first sensing device includes one or more of the following: information about a location of the first sensing device, information about a sensing area of the first sensing device, information about a parameter that is capable of being sensed by the first sensing device, or information indicating that the first sensing device is capable of serving as the sensing signal transmit side and/or the sensing signal receive side.

In an optional implementation, the method further includes: receiving capability information of at least one sensing device, where the at least one sensing device includes the second sensing device, and capability information of the second sensing device includes one or more of the following: information about a location of the second sensing device, information about a sensing area of the second sensing device, information about a parameter that is capable of being sensed by the second sensing device, or information indicating that the second sensing device is capable of serving as the sensing signal transmit side and/or the sensing signal receive side.

The first sensing device may send the capability information of the first sensing device to the core network device, and/or the first sensing device may further exchange respective capability information with another sensing device, so that network elements that can be selected as sensing devices in embodiments of this application are diversified.

In an optional implementation, the first core network device is an SF.

In an optional implementation, the second core network device is an NRF.

For technical effect brought by some optional implementations of the second aspect, refer to descriptions of technical effect brought by the first aspect or the corresponding implementations.

According to a third aspect, a third communication method is provided. The method may be performed by a second sensing device, or may be performed by a chip system. The chip system can implement a function of the second sensing device. The method includes: receiving a second sensing signal reflected by a target object, where the second sensing signal is used by the second sensing device and a first sensing device to sense the target object, the first sensing device is a sensing signal transmit side, and the second sensing device is a sensing signal receive side; determining, based on the second sensing signal, that the target object moves from a first location to a second location; determining a target sensing device based on the second location, where the target sensing device includes a third sensing device and/or a fourth sensing device, the third sensing device is a new sensing signal transmit side, and the fourth sensing device is a new sensing signal receive side; and triggering the target sensing device to sense the target object.

**In** this embodiment of this application, when the target object changes from the first location to the second location, the target object may have left or is about to leave a sensing area of an original sensing device (the first sensing device and/or the second sensing device). In this case, the second sensing device may determine a new sensing device, namely, the target sensing device, based on a new location (the second location) of the target object, so that the target sensing device can continue to sense the target object. In this way, even if the target object moves, in this embodiment of this application, the target object can still be continuously sensed, so that a probability of sensing interruption is reduced, information about the target object can be obtained in time, and continuity and a success rate of sensing the target object are improved.

In an optional implementation, triggering the target sensing device to sense the target object includes: when the target sensing device includes the third sensing device, sending first indication information to the third sensing device, where the first indication information is used to trigger the target sensing device to sense the target object, and the first indication information indicates one or more of the following: the third sensing device being a sensing signal transmit side, an identifier of the fourth sensing device, the fourth sensing device being a sensing signal receive side, or the second location; or when the target sensing device includes the third sensing device, sending first indication information to the third sensing device, where the first indication information is used to trigger the target sensing device to sense the target object, and the first indication information indicates one or more of the following: the third sensing device being a sensing signal transmit side, an identifier of the second sensing device, the second sensing device being a sensing signal receive side, or the second location; or when the target sensing device includes the third sensing device, sending first indication information to the third sensing device, where the first indication information is used to trigger the target sensing device to sense the target object, and the first indication information indicates one or more of the following: the third sensing device being a sensing signal transmit side, an identifier of the first sensing device, the first sensing device being a sensing signal receive side, or the second location.

In an optional implementation, triggering the target sensing device to sense the target object includes: when the target sensing device includes the fourth sensing device, sending second indication information to the fourth sensing device, where the second indication information is used to trigger the target sensing device to sense the target object, and the second indication information indicates one or more of the following: the fourth sensing device being a sensing signal receive side, an identifier of the third sensing device, the third sensing device being a sensing signal transmit side, or the second location; or when the target sensing device includes the fourth sensing device, sending second indication information to the fourth sensing device, where the second indication information is used to trigger the target sensing device to sense the target object, and the second indication information indicates one or more of the following: the fourth sensing device being a sensing signal receive side, an identifier of the first sensing device, the first sensing device being a sensing signal transmit side, or the second location; or when the target sensing device includes the fourth sensing device, sending second indication information to the fourth sensing device, where the second indication information is used to trigger the target sensing device to sense the target object, and the second indication information indicates one or more of the following: the fourth sensing device being a sensing signal receive side, an identifier of the second sensing device, the second sensing device being a sensing signal transmit side, or the second location.

In an optional implementation, before receiving the second sensing signal reflected by the target object, the method further includes: receiving sixth indication information from a first core network device or the first sensing device, where the sixth indication information indicates one or more of the following: the first sensing device being a sensing signal transmit side, the identifier of the first sensing device, the second sensing device being a sensing signal receive side, or the first location.

In an optional implementation, the sixth indication information is from the first core network device, and the method further includes: determining the first sensing device based on the first location and capability information of at least one sensing device; and sending fourth indication information to the first sensing device, where the fourth indication information indicates one or more of the following: the first location, the identifier of the second sensing device, the first sensing device being a sensing signal transmit side, or the second sensing device being a sensing signal receive side. For example, both the first sensing device and the second sensing device may be selected by the first core network device; or the second sensing device is selected by the first core network device, and the first sensing device is selected by the second sensing device; or the first sensing device is selected by the first core network device, and the second sensing device is selected by the first sensing device.

In an optional implementation, the method further includes: sending capability information of the second sensing device to the first core network device or a second core network device; and/or sending the capability information of the second sensing device to one or more sensing devices, where the capability information of the second sensing device includes one or more of the following: information about a location of the second sensing device, information about a sensing area of the second sensing device, information about a parameter that is capable of being sensed by the second sensing device, or information indicating that the second sensing device is capable of serving as the sensing signal transmit side and/or the sensing signal receive side.

In an optional implementation, the method further includes: receiving capability information of at least one sensing device, where the at least one sensing device includes the first sensing device, and capability information of the first sensing device includes one or more of the following: information about a location of the first sensing device, information about a sensing area of the first sensing device, information about a parameter that is capable of being sensed by the first sensing device, or information indicating that the first sensing device is capable of serving as the sensing signal transmit side and/or the sensing signal receive side.

In an optional implementation, determining, based on the second sensing signal, that the target object moves from the first location to the second location includes: determining a movement trajectory of the target object based on the second sensing signal; and determining, based on the movement trajectory, that the target object moves from the first location to the second location, where the target object is currently located at the second location in the movement trajectory.

In an optional implementation, determining the target sensing device includes: sending sensing information of the target object to the first core network device, where the sensing information is determined based on the second sensing signal, and the sensing information is used to determine the movement trajectory of the target object; and receiving eighth indication information from the first core network device, and determining the target sensing device based on the eighth indication information, where the eighth indication information indicates one or more of the following: the second location, the identifier of the third sensing device, the third sensing device being a sensing signal transmit side, or the second sensing device being a sensing signal receive side. The second sensing device may send the sensing information to the first core network device, and the first core network device determines a parameter of the target object. For example, when determining that the target object has moved out of or is expected to move out of the sensing area of the first sensing device and/or the sensing area of the second sensing device, the first core network device may re-determine the sensing device. A process of selecting the sensing device is performed by the first core network device, which helps simplify implementation of the sensing device.

In an optional implementation, the method further includes: changing the second sensing device from the sensing signal receive side to the sensing signal transmit side, where the target sensing device includes the fourth sensing device and the third sensing device, and the second sensing device is the third sensing device. The second sensing device may determine a role change of the second sensing device, so that the sensing process is flexible.

In an optional implementation, determining the target sensing device based on the second location includes: sending a third request to the first sensing device, where the third request is used to request the first sensing device to select the new sensing signal receive side and/or the new sensing signal transmit side, and the third request includes information about the second location; and receiving a first response from the first sensing device, where the first response includes an identifier of the target sensing device. The second sensing device may select the target sensing device. For example, the second sensing device may determine the parameter of the target object, so that when determining that the target object has moved out of or is expected to move out of the sensing area of the first sensing device and/or a sensing area of the second sensing device, the second sensing device may re-determine the sensing device. Alternatively, the second sensing device may request the first sensing device to select the target sensing device. This is flexible.

In an optional implementation, the first core network device is an SF.

In an optional implementation, the second core network device is an NRF.

For technical effect brought by some optional implementations of the third aspect, refer to descriptions of technical effect of the first aspect or the corresponding implementations, and/or refer to descriptions of technical effect of the second aspect or the corresponding implementations.

According to a fourth aspect, a communication apparatus is provided. The communication apparatus has a function of implementing behavior in the method embodiments according to any one of the first aspect to the third aspect. For beneficial effect, refer to the foregoing descriptions. Details are not described herein again.

The communication apparatus may implement a function of the first core network device in any one of the first aspect to the third aspect. For example, the communication apparatus is the first core network device in any one of the first aspect to the third aspect, or is an electronic device (for example, a chip system) configured in the first core network device, or is a large device including the first core network device. The first core network device includes a corresponding means (means) or module for performing the foregoing method. Alternatively, the communication apparatus may implement a function of the first sensing device in any one of the first aspect to the third aspect. For example, the communication apparatus may be the first sensing device in any one of the first aspect to the third aspect, or an electronic device (for example, a chip system) configured in the first sensing device, or a large device including the first sensing device. The first sensing device includes a corresponding means or module for performing the foregoing method. Alternatively, the communication apparatus may implement a function of the second sensing device in any one of the first aspect to the third aspect. For example, the communication apparatus may be the second sensing device in any one of the first aspect to the third aspect, or an electronic device (for example, a chip system) configured in the second sensing device, or a large device including the second sensing device. The second sensing device includes a corresponding means or module for performing the foregoing method. For example, the communication apparatus includes a processing unit (or referred to as a processing module) and a transceiver unit (or referred to as a transceiver module).

When the communication apparatus can implement a function of the first core network device in any one of the first aspect to the third aspect, in an example, the processing unit is configured to determine, based on a first location at which a target object is located, a first sensing device and a second sensing device to sense the target object, where the first sensing device is a sensing signal transmit side, and the second sensing device is a sensing signal receive side. The processing unit is further configured to: when the target object moves from the first location to a second location, determine a target sensing device based on the second location, where the target sensing device includes a third sensing device and/or a fourth sensing device, the third sensing device is a new sensing signal transmit side, and the fourth sensing device is a new sensing signal receive side. The transceiver unit is configured to trigger the target sensing device to sense the target object.

When the communication apparatus can implement a function of the first sensing device in any one of the first aspect to the third aspect, in another example, the transceiver unit is configured to send a first sensing signal to a target object located at a first location, where the first sensing signal is used by the first sensing device and a second sensing device to sense the target object, the first sensing device is a sensing signal transmit side, and the second sensing device is a sensing signal receive side. The transceiver unit is further configured to receive a third request, where the third request is used to trigger the first sensing device to select a target sensing device, and the third request includes information about a second location of the target object after movement. The processing unit is configured to determine the target sensing device based on the second location, where the target sensing device includes a third sensing device and/or a fourth sensing device, the third sensing device is a new sensing signal transmit side, and the fourth sensing device is a new sensing signal receive side.

When the communication apparatus can implement a function of the second sensing device in any one of the first aspect to the third aspect, in an example, the transceiver unit is configured to receive a second sensing signal reflected by a target object located at a first location, where the second sensing signal is used by the second sensing device and a first sensing device to sense the target object, the first sensing device is a sensing signal transmit side, and the second sensing device is a sensing signal receive side. The processing unit is configured to: when the target object moves to a second location, determine a target sensing device based on the second location, where the target sensing device includes a third sensing device and/or a fourth sensing device, the third sensing device is a new sensing signal transmit side, and the fourth sensing device is a new sensing signal receive side.

**In** an optional implementation, the communication apparatus includes a storage unit. The processing unit can be coupled to the storage unit, and execute a program or instructions in the storage unit, to enable the communication apparatus to perform a function of the first core network device, the first sensing device, or the second sensing device.

**In** an optional implementation, the communication apparatus includes a processor, coupled to a memory, and configured to execute instructions in the memory, to implement the method performed by the first core network device, the first sensing device, or the second sensing device in any one of the first aspect to the third aspect. Optionally, the communication apparatus further includes other components, for example, an antenna, an input/output module, and an interface. These components may be hardware, software, or a combination of software and hardware.

According to a fifth aspect, a communication apparatus is provided. The communication apparatus may be a first core network device, or may be a chip or a chip system used in the first core network device. Alternatively, the communication apparatus may be a first sensing device, or a chip or a chip system used in the first sensing device. Alternatively, the communication apparatus may be a second sensing device, or a chip or a chip system used in the second sensing device. The communication apparatus includes a communication interface and a processor, and optionally, further includes a memory. The memory is configured to store a computer program. The processor is coupled to the memory and the communication interface. When the processor reads the computer program or instructions, the communication apparatus performs the method performed by the first core network device, the first sensing device, or the second sensing device in any one of the first aspect to the third aspect.

According to a sixth aspect, a communication system is provided. The communication system may include a first core network device and a target sensing device. The first core network device may implement, for example, the method performed by the first core network device in any one of the first aspect to the third aspect, and the target sensing device may implement, for example, the method performed by the target sensing device in any one of the first aspect to the third aspect. Optionally, the first core network device may be implemented by using the communication apparatus according to the fourth aspect or the fifth aspect, and the target sensing device may be implemented by using the communication apparatus according to the fourth aspect or the fifth aspect.

Optionally, the first core network device is configured to: determine, based on a first location at which a target object is located, a first sensing device and a second sensing device to sense the target object, where the first sensing device is a sensing signal transmit side, and the second sensing device is a sensing signal receive side; when the target object moves from the first location to a second location, determine the target sensing device based on the second location, where the target sensing device includes a third sensing device and/or a fourth sensing device, the third sensing device is a new sensing signal transmit side, and the fourth sensing device is a new sensing signal receive side; and trigger the target sensing device to sense the target object. The target sensing device is configured to sense the target object.

According to a seventh aspect, another communication system is provided, where the communication system may include a first sensing device and a second sensing device. The first sensing device may implement, for example, the method performed by the first sensing device in any one of the first aspect to the third aspect, and the second sensing device may implement, for example, the method performed by the second sensing device in any one of the first aspect to the third aspect. Optionally, the first sensing device may be implemented by using the communication apparatus according to the fourth aspect or the fifth aspect; and the second sensing device may be implemented by using the communication apparatus according to the fourth aspect or the fifth aspect.

Optionally, the first sensing device is configured to send a first sensing signal to a target object located at a first location, where the first sensing signal is used by the first sensing device and a second sensing device to sense the target object, the first sensing device is a sensing signal transmit side, and the second sensing device is a sensing signal receive side. The second sensing device is configured to: receive a second sensing signal reflected by the target object, and determine, based on the second sensing signal, that the target object moves from the first location to a second location. Option 1: The second sensing device is further configured to determine a target sensing device based on the second location, where the target sensing device includes a third sensing device and/or a fourth sensing device, the third sensing device is a new sensing signal transmit side, and the fourth sensing device is a new sensing signal receive side; and trigger the target sensing device to sense the target object. Option 2: The second sensing device is further configured to send a third request to the first sensing device, where the third request is used to trigger the first sensing device to select a target sensing device, and the third request includes information about the second location of the target object after movement; and the first sensing device is further configured to: receive the third request from the second sensing device, determine the target sensing device based on the second location, and trigger the target sensing device to sense the target object, or send a response to the third request to the second sensing device, where the response indicates the target sensing device.

According to an eighth aspect, a computer-readable storage medium is provided. The computer-readable storage medium is configured to store a computer program, and when the computer program is run on a computer, the computer is enabled to perform the method according to any one of the first aspect to the third aspect.

According to a ninth aspect, a computer program product is provided. The computer program product includes a computer program, and when the computer program is run on a computer, the computer is enabled to perform the method according to any one of the first aspect to the third aspect.

According to a tenth aspect, a chip system is provided, including a processor and an interface. The processor is configured to invoke instructions from the interface and run the instructions, and when the processor executes the instructions, the method according to any one of the first aspect to the third aspect is implemented.

### BRIEF DESCRIPTION OF DRAWINGS

FIG. 1A is a diagram of a working mode in which a sensing device serves as both a sensing signal transmit side and a sensing signal receive side;
FIG. 1B is a diagram of a working mode in which a sensing device 1 serves as a sensing signal transmit side and a sensing device 2 serves as a sensing signal receive side;
FIG. 2A and FIG. 2B are diagrams of two network architectures applicable to embodiments of this application;
FIG. 3 is a diagram of a scenario after movement of a target object according to an embodiment of this application;
FIG. 4 to FIG. 10 are flowcharts of several communication methods according to embodiments of this application;
FIG. 11 is a diagram of an apparatus according to an embodiment of this application; and
FIG. 12 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)", "one or more of", or a similar expression refers to any combination of these items, including a single item (piece) or any combination of a plurality of items (pieces). For example, at least one of a, b, or c, or one or more of a, b, or c, represents a, b, c, a and b, a and c, b and c, or a, b, and c. Each of a, b, or c may be singular or plural.

Ordinal numbers such as "first" and "second" in embodiments of this application are intended to distinguish between a plurality of objects, but are not intended to limit sizes, content, an order, a time sequence, priorities, importance degrees, or the like of the plurality of objects. In addition, step numbers in embodiments described in embodiments of this application are merely intended to distinguish between different steps, but are not intended to limit a sequence of the steps. For example, S401 may be performed before S402, or may be performed after S402, or may be simultaneously performed with S402.

The following describes some terms or concepts in embodiments of this application, to facilitate understanding of a person skilled in the art.
(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios, for example, may be a terminal device in, including but not limited to, the following scenarios: cellular communication, device-to-device (device-to-device, D2D) communication, V2X, machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, a robot, and the like. The terminal device may sometimes be referred to as UE, a terminal, an access station, a UE station, a remote station, a wireless communication device, a user apparatus, or the like.
   In embodiments of this application, a communication apparatus configured to implement a function of the terminal device may be a terminal device, or may be an apparatus that can support the terminal device to implement the function, for example, a chip system. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, in this embodiment of this application, an example in which the terminal device is UE is used for description.
(2) A network device in embodiments of this application includes, for example, an access network device and/or a core network device. The access network device is a device having a wireless transceiver function, and is configured to communicate with the terminal device. The access network device includes, but is not limited to, a base station (base transceiver station (base transceiver station, BTS)), NodeB, (eNodeB/eNB, or gNodeB/gNB), a transmission reception point (transmission reception point, TRP), a base station evolved from the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a road side unit (road side unit, RSU). The following provides descriptions by using an example in which the access network device is the base station. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments this application. A 5th generation (5th generation, 5G) mobile communication system is used as an example, the core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device to implement the function. The apparatus may be installed in the network device. In the technical solutions provided in embodiments of this application, the technical solutions provided in embodiments of this application are described by using an example in which the apparatus configured to implement the function of the network device is the network device.

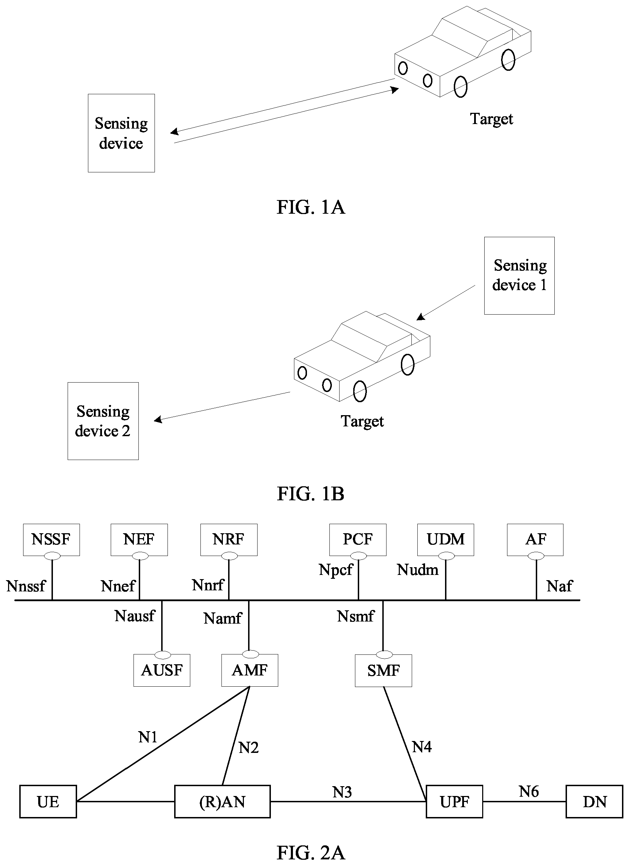

FIG. 2A is a diagram of a 5G network architecture based on a service-based architecture. The network architecture is also a network architecture applicable to embodiments of this application. The 5G network architecture shown in FIG. 2A may include three parts: a UE part, a DN, and an operator network part.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified repository (unified data repository, UDR) network element, a network repository function (network repository function, NRF) network element, an application function (application function, AF) network element, a network slice selection function (network slice selection function, NSSF) network element, an access and mobility management function (access and mobility management function, AMF) network element, an SMF network element, a (radio) access network (radio access network, (R)AN), or a user plane function (user plane function, UPF) network element.

The operator network includes the radio access network and a core network. The UE accesses the core network through the (R)AN, and the core network includes a user plane network element and a control plane network element. The user plane network element of the core network includes the UPF, and the control plane network element of the core network includes at least one of the AUSF, the AMF, the SMF, an NSSF, the NEF, the NRF, the UDM, the PCF, the AF, or the like.

The user plane network element (for example, the UPF) is mainly responsible for packet data packet forwarding, quality of service (quality of service, QoS) control, charging information statistics collection, and the like. The control plane network element is mainly responsible for service procedure interaction, and delivering a data packet forwarding policy, a QoS control policy, and the like to a user plane. In embodiments of this application, it is considered that a device like a sensor may access the core network through a device like the UE, and the (R)AN, so that a controller connected to a device like the sensor in industrial Ethernet can perform industrial data communication on the user plane through the UPF.

A control plane of the core network may use the service-based architecture, to be specific, a point-to-point communication mode in a conventional architecture is replaced with a service invoking mode for interaction between control plane network elements. In the service-based architecture, a control plane network element exposes a service to another control plane network element for invoking by the another control plane network element. In point-to-point communication, a set of specific messages exist in a communication interface between control plane network elements, and can be used only by control plane network elements at two sides of the interface during communication.

Functions of the network elements in the core network are described as follows:

The UPF supports all or a part of the following functions: interconnection between a protocol data unit (protocol data unit, PDU) session and a data network, packet routing and forwarding (for example, supporting uplink classification (uplink classification) on traffic and forwarding the traffic to a data network, and supporting a branching point (branching point) to support a multi-homed (multi-homed) PDU session), or data packet detection.

The AMF performs access management and mobility management on the UE, and is responsible for status maintenance of the UE, reachability management of the UE, forwarding of a non-mobility management (mobility management, MM) non-access-stratum (non-access-stratum, NAS) message, and forwarding of a session management (session management, SM) N2 message.

The SMF performs session management on the UE, and allocates and releases a resource for a session of the UE. The resource includes session quality of service (quality of service, QoS), a session path, a forwarding rule, and the like. The SMF is responsible for selecting or reselecting a UPF, allocating an Internet protocol (Internet protocol, IP) address, and further responsible for bearer establishment, modification, release, and the like.

The NEF exposes a network function to a third party through a northbound application programming interface (application programming interface, API).

The NRF stores and selects network function entity information for another network element.

The UDM, namely, user subscription context management, manages the subscription data of UEs and notifies corresponding network elements when the subscription data is modified.

The UDR, namely, unified data repository, is responsible for storing and retrieving subscription data, policy data, and common architecture data for the UDM, the PCF, or the NEF to obtain. The UDR have different data access authentication mechanisms for different types of data (for example, the subscription data and the policy data), to ensure data access security. The UDR needs to return a failure response carrying an appropriate cause value for an invalid service operation or data access request.

The PCF performs user policy management, and is configured to generate and manage users, sessions, and QoS flow handling policies.

AF, namely, application management: provides an application layer service for the UE. When providing the service for the UE, the AF has requirements for QoS (policy (policy)) and charging (charging) policies and needs to notify the network. In addition, the AF also needs a core network to feed back application-related information.

Related interfaces between the network element functions in embodiments of this application include:
N1: is an interface between the UE and the control plane of the core network.
N2: is a communication interface between the (R)AN and the control plane of the core network.
N3: is a communication interface between the (R)AN and the UPF, and is configured to transmit user plane data.
N4: is a communication interface between the SMF and the UPF, and is used by the SMF to perform policy configuration and the like on the UPF.
N6: is a communication port between the UPF and the DN.

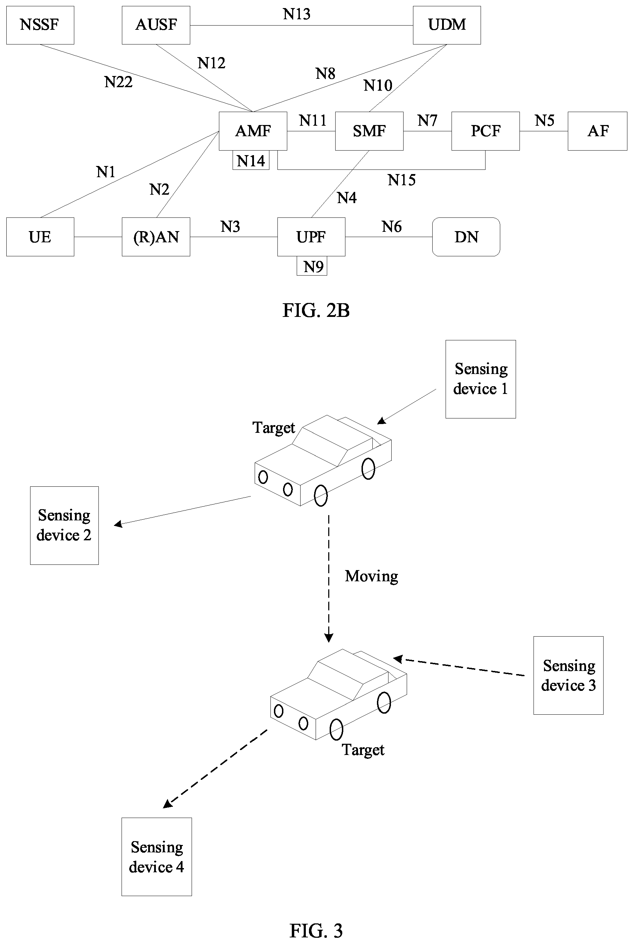

FIG. 2B is a diagram of a 5G network architecture based on a point-to-point interface. The network architecture is another network architecture applicable to embodiments of this application. For network elements in FIG. 2B, refer to descriptions of related network elements in FIG. 2A. A main difference between FIG. 2B and FIG. 2A lies in that interfaces between the network elements in FIG. 2B are point-to-point interfaces instead of service-based interfaces.

The following describes the method provided in this embodiment of this application with reference to the accompanying drawings. In embodiments of this specification, a sensing device may be configured to implement a sensing function, and the sensing device may include a network device (which may be referred to as a sensing network device) or a terminal device (which may be referred to as a sensing terminal device), and the like. For example, the sensing terminal device may be a mobile phone, and the sensing network device may be a base station. The sensing device may sense a target in a manner of self-transmitting and self-receiving. The "self-transmitting and self-receiving" is a working mode in which a sensing device serves as both a sensing signal transmit side and a sensing signal receive side. Refer to FIG. 1A. For example, the sensing device may send a sensing signal, and may receive a signal reflected after the sensing signal arrives at a target. The sensing device may sense information such as a location and a speed of the target by comparing a sent sensing signal with a received signal. Alternatively, the sensing device may sense the target in a manner of self-transmitting and other-receiving (or referred to as A-transmitting and B-receiving). The "self-transmitting and other-receiving" refers to a working mode in which one sensing device serves as a sensing signal transmit side and the other sensing device serves as a sensing signal receive side. Refer to FIG. 1B. For example, a sensing device 1 may send a sensing signal, and another sensing device (for example, a sensing device 2 in FIG. 1B) may receive a signal reflected after the sensing signal arrives at a target. A sensing device (for example, the sensing device 1) configured to send a sensing signal may be referred to as a sensing signal transmit side, or may be referred to as a sensing transmitter (sensing transmitter). A sensing device (for example, the sensing device 2) configured to receive a sensing signal may be referred to as a sensing signal receive side, or may be referred to as a sensing receiver (sensing receiver). The sensing device 2 may measure information such as a location and a speed of the target by using the received signal. It may be understood that different sensing modes have different requirements for a capability of a sensing device. In different application scenarios, different sensing modes may be used to perform sensing measurement on a surrounding environment. In FIG. 1A and FIG. 1B, an example in which the target is a vehicle is used. This is not limited in practice.

In embodiments of this specification, a sensing function (sensing function, SF) is, for example, a newly added network element (not shown in FIG. 2A and FIG. 2B) in a core network, and is responsible for sensing-related service management, for example, selecting a sensing device, and determining parameters such as a location and a speed of a target based on information from the sensing device; or the SF may be an SMF, an AMF, or a location management function (location management function, LMF) to which the sensing function is added; or the SF may be a module in the SMF, the AMF, or the LMF; or the SF may have functions of one or more network elements in the SMF, the AMF, or the LMF. It may be understood that the SF may be used to replace one or more network elements in the SMF, the AMF, or the LMF.

Embodiments of this specification may be applied to the network architecture shown in FIG. 2A or FIG. 2B. For example, the second core network device described in embodiments of this specification may be the NRF in FIG. 2A or FIG. 2B. The first core network device described in embodiments of this specification may be an SF. The SF may be the AMF or the SMF in FIG. 2A or FIG. 2B, or may be a module in the AMF or the SMF, or may be a module in the LMF or the LMF that is not shown in FIG. 2A or FIG. 2B, or may be an independent network element that is not shown in FIG. 2A or FIG. 2B. In embodiments of this specification, an example in which the first core network device is an SF and the second core network device is an NRF is used. In the accompanying drawings corresponding to embodiments of this specification, all steps represented by dashed lines are optional steps.

It may be understood that embodiments of this application may be applied to a future communication system, for example, a 6G system. When embodiments of this application are applied to the future communication system, names of a terminal device, an access network device, and a core network device that has a sensing function and another function may change. This is not limited in embodiments of this application. For ease of understanding, the following describes a specific solution by using an example in which embodiments of this application are applied to a 5G system.

In embodiments of this specification, an example in which a sensing signal transmit side and a sensing signal receive side are different sensing devices is used, that is, a working mode of self-transmitting and other-receiving is used as an example. For a network architecture used before a target object moves, refer to FIG. 1B. After the target device moves, the following situations may occur.

In Case 1, the target object has left or is expected to leave a sensing area of the sensing signal transmit side, but does not leave or is not expected to leave a sensing area of the sensing signal receive side.

In Case 2, the target object has left or is expected to leave the sensing area of the sensing signal receive side, but does not leave or is not expected to leave the sensing area of the sensing signal transmit side.

In Case 3, the target object has left or is expected to leave the sensing area of the sensing signal transmit side, and has left or is expected to leave the sensing area of the sensing signal receive side.

FIG. 3 shows examples of these cases. In comparison with FIG. 1B, in FIG. 3, a sensing device 3 and a sensing device 4 are added. The sensing device 3 is a new sensing signal transmit side, and the sensing device 4 is a new sensing signal receive side. For example, in Case 1, it is considered that the sensing device 3 replaces the sensing device 1 to send a sensing signal, and the sensing device 2 continues to work. In this case, the sensing device 4 is not included. In Case 2, it is considered that the sensing device 4 replaces the sensing device 2 to receive the sensing signal, and the sensing device 1 continues to work. In this case, the sensing device 3 is not included. In Case 3, it is considered that the sensing device 3 replaces the sensing device 1 to send the sensing signal, and the sensing device 4 replaces the sensing device 2 to receive the sensing signal. In FIG. 3, an example in which the target is a vehicle is also used. This is not limited in practice. In other words, the new sensing signal transmit side means that the device is a device that is different from the sensing signal transmit side that is applicable to the target object before the target object moves, and does not mean that the device is a newly established or newly deployed device. The new sensing signal receive side means that the device is a device that is different from the sensing signal receive side that is applicable to the target object before the target object moves, and does not mean that the device is a newly established or newly deployed device.

Embodiments in this specification may be applied to the architecture shown in FIG. 2A or FIG. 2B, and may be further applied to the scenarios shown in FIG. 1B and FIG. 3. For example, before the target object moves, the scenario shown in FIG. 1B may be applied, and after the target object moves, the scenario shown in FIG. 3 may be applied. For example, in embodiments of this specification, the first sensing device is the sensing device 1 in FIG. 1B or FIG. 3, the second sensing device is the sensing device 2 in FIG. 1B or FIG. 3, the third sensing device is the sensing device 3 in FIG. 3, and the fourth sensing device is the sensing device 4 in FIG. 3.

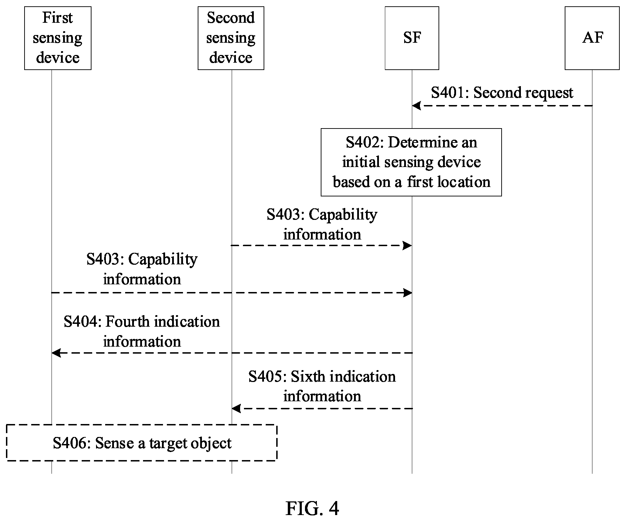

An embodiment of this application provides a first communication method. FIG. 4 is a flowchart of the method.

S401: An AF sends a second request to an SF. Correspondingly, the SF receives the second request from the AF. For example, the second request is also referred to as a sensing service request. A name is not limited.

The second request may be used to request to sense a target object, and the second request may further indicate an initial location of the target object, for example, a first location. For example, before determining the target object, the AF may first request the SF to perform sensing measurement on an area, or request the SF to perform sensing measurement on an object in an area. In this case, a measurement process may not be targeted at one or more specific objects, but overall measurement is performed on the area. The SF may select a proper sensing device to perform sensing measurement on the area, for example, select a sensing device whose sensing area can cover the area to perform sensing measurement. After obtaining a sensing measurement result, the SF may send the sensing measurement result to the AF. The AF may determine environment information or an object in the area based on the sensing measurement result, to determine which object is used as the target object or an object that needs to be tracked. After determining the target object, the AF may send the second request to the SF.

Optionally, the second request may further indicate a first parameter, and/or indicate first duration. The first parameter is a parameter that is of the target object and that is to be determined by sensing the target object. The first parameter (or a reference of the target object) may include one or more parameters. For example, the first parameter (or the reference of the target object) includes one or more of the following: a location parameter of the target object, a size parameter of the target object, a shape parameter of the target object, or a movement trajectory parameter of the target object. For example, if the second request indicates the movement trajectory parameter of the target object, the SF can determine that a movement trajectory of the target object needs to be determined by sensing the target object. Although the second request may indicate the initial location of the target object, the target object may be in a moving state. Therefore, the first parameter may still include the location parameter of the target object, so that a location of the target object after movement can be determined. In addition, a first parameter (or a reference of a target object) in the following embodiments is the first parameter (or the reference of the target object) described herein, and details are not described in the following embodiments.

The first duration is duration for sensing the target object. Optionally, the second request may indicate only the first duration, but does not indicate a time domain location of the first duration (for example, does not indicate a start moment or an end moment of the first duration). In this case, when a sensing process starts may be determined by a device like a sensing signal transmit side, a sensing signal receive side, or the SF, provided that the sensing process lasts for the first duration. Alternatively, the second request may indicate start time of the first duration and the first duration, or indicate end time of the first duration and the first duration, or indicate start time and end time of the first duration. Therefore, both the first duration and the time domain location of the first duration are indicated. Alternatively, the second request may not indicate the first duration, and the duration of the sensing process may be determined by the device like the sensing signal transmit side, the sensing signal receive side, or the SF.

Optionally, the second request may further indicate a sensing mode, for example, indicate that the sensing mode is a mode of A-transmitting and B-receiving (that is, a device A sends a sensing signal, and a device B receives the sensing signal).

Alternatively, the AF may not send the second request to the SF. For example, the SF may determine to sense a target object. Therefore, S401 is an optional step.

S402: The SF determines an initial sensing device based on the first location, or the SF determines, based on the first location, an initial sensing device to sense the target object. In this case, the SF initially selects the sensing device to sense the target object. Therefore, the sensing device selected by the SF this time is referred to as an initial sensing device. The initial sensing device may include a first sensing device and a second sensing device, where the first sensing device is a sensing signal transmit side, and the second sensing device is a sensing signal receive side. That is, the SF may select two sensing devices participating in a sensing process.

Optionally, the SF may determine the initial sensing device, or the SF may determine the initial sensing device via another device.

For example, if the SF obtains capability information of a sensing device, the SF may determine the initial sensing device. Optionally, the method may further include S403: At least one sensing device sends capability information to the SF, and correspondingly, the SF receives the capability information from the at least one sensing device. For example, S403 may be performed before S402. One sensing device may directly send the capability information to the SF, or may forward the capability information to the SF via another device, for example, forward the capability information to the SF via an AMF or another device. The capability information sent by one sensing device may indicate a sensing capability of the sensing device, and the capability information of the sensing device may indicate (or include) one or more of the following: information about a location of the sensing device, information about a sensing area of the sensing device, information about a role supported by the sensing device, or a parameter that the sensing device supports sensing. The information about the role supported by the sensing device is, for example, information indicating that the sensing device can serve as the sensing signal transmit side and/or the sensing signal receive side, and is equivalent to a role that the sensing device can play in the sensing process. Optionally, the location of the sensing device in embodiments of this application may be fixed. For example, a sensing device may be a device fixed on a roadside or in a building. Therefore, a sensing capability of the sensing device may indicate information about a location of the sensing device. The information about the sensing area of the sensing device may indicate a geographical area that can be covered by the sensing device, for example, indicate a geographical area that uses a location of the sensing device as a center. The information about the role supported by the sensing device indicates, for example, whether the sensing device can serve as the sensing signal transmit side and/or whether the sensing device can serve as the sensing signal receive side. The information about the parameter that the sensing device supports sensing indicates, for example, a parameter that is of the target object and that can be obtained by the sensing device. In addition, the sensing capability of the sensing device may further indicate another capability of the sensing device. This is not limited herein. If the SF obtains the capability information of the at least one sensing device, in S402, the SF may determine the initial sensing device. For example, in S402, the SF may determine the initial sensing device based on the capability information of the at least one sensing device and the first location, where the sensing area of the initial sensing device determined by the SF can cover the first location. Optionally, if the second request further indicates the first parameter in S401, the SF may further consider the first parameter when selecting the initial sensing device. For example, the initial sensing device selected by the SF may support obtaining of the first parameter of the target object.

Alternatively, the SF may determine the initial sensing device via another device. For example, if the SF does not obtain the capability information of the sensing device, the SF may request another device to determine the initial sensing device. Optionally, S403 may be replaced with that the at least one sensing device sends the capability information to an NRF, and correspondingly, the NRF receives the capability information from the at least one sensing device. One sensing device may directly send the capability information to the NRF, or may forward the capability information to the NRF via another device, for example, forward the capability information to the NRF via an AMF or another device. If the NRF obtains the capability information of the at least one sensing device, in S402, the SF may request the NRF to determine the initial sensing device. For example, the SF may send a first request to the NRF. The first request may be used to request to determine a device for sensing the target object, or request to determine information about a device for sensing the target object. In addition, the first request may further indicate the first location. After receiving the first request, the NRF may determine the initial sensing device based on the capability information of the at least one sensing device and the first location, where the sensing area of the initial sensing device determined by the NRF can cover the first location. Optionally, if the second request further indicates the first parameter in S401, the NRF may further consider the first parameter when selecting the initial sensing device. For example, the initial sensing device selected by the NRF may support obtaining of the first parameter of the target object. Optionally, the first request may further indicate a sensing mode, for example, indicate that the sensing mode is a mode of A-transmitting and B-receiving (that is, a device A sends a sensing signal, and a device B receives the sensing signal). After determining the initial sensing device, the NRF may send information about the initial sensing device to the SF, so that the SF can determine the initial sensing device. Information that is about a sensing device and that is sent by the NRF may include an identifier of the sensing device, or include an identifier of the sensing device and capability information of the sensing device. Optionally, the information about the sensing device may further indicate a role of the sensing device, for example, indicate that the sensing device serves as the sensing signal transmit side or the sensing signal receive side. An identifier of a sensing device includes, for example, an identifier (ID) of the sensing device and/or address information of the sensing device.

The at least one sensing device described above includes, for example, a target sensing device. The target sensing device is described in another embodiment in the following. Optionally, the at least one sensing device may further include the first sensing device and/or the second sensing device. In S403 in FIG. 4, that both the first sensing device and the second sensing device send capability information to the SF is used as an example. In addition, the at least one sensing device may further include another sensing device. This is not limited herein.

Optionally, the method further includes S404: The SF sends fourth indication information to the first sensing device. Correspondingly, the first sensing device receives the fourth indication information from the SF. If the initial sensing device selected by the SF includes the first sensing device, S404 may be performed.

The fourth indication information may indicate one or more of the following: the first sensing device being a sensing signal transmit side, an identifier of the second sensing device, the second sensing device being a sensing signal receive side, the first location, the first parameter, or the first duration. The first parameter may be from the second request, or the first parameter may be determined by the SF. The first duration may be from the second request, or the first duration may be determined by the SF.

After receiving the fourth indication information, the first sensing device may sense the target object. For example, after receiving the fourth indication information, the first sensing device may start to perform a sensing process, or the first sensing device may wait for specific duration after receiving the fourth indication information, and then execute the sensing process.

If the fourth indication information indicates the first sensing device being a sensing signal transmit side, and/or indicates the second sensing device being a sensing signal receive side, the first sensing device can determine a role of the first sensing device in the sensing process, that is, the first sensing device can determine that the first sensing device serves as the sensing signal transmit side. Alternatively, if the fourth indication information neither indicates the first sensing device being a sensing signal transmit side nor indicates the second sensing device being a sensing signal receive side, it is equivalent that the SF does not indicate the role of the first sensing device. In this case, the first sensing device may determine the role of the first sensing device. For example, the first sensing device may determine the first sensing device being a sensing signal transmit side or the sensing signal receive side. In this embodiment of this application, an example in which the first sensing device is the sensing signal transmit side is used. In the sensing process, the first sensing device may send a sensing signal to the target object located at the first location. After arriving at the target object, the sensing signal is reflected or refracted by the target object. The reflected or refracted signal (also referred to as a sensing signal) arrives at the second sensing device. The second sensing device may obtain sensing information based on the sensing signal, and may determine the parameter of the target object based on the sensing information.

Optionally, the method further includes S405: The SF sends sixth indication information to the second sensing device. Correspondingly, the second sensing device receives the sixth indication information from the SF. If the initial sensing device selected by the SF includes the second sensing device, S405 may be performed.

The sixth indication information may indicate one or more of the following: the second sensing device being a sensing signal receive side, an identifier of the first sensing device, the first sensing device being a sensing signal transmit side, the first location, the first parameter, or the first duration. The first parameter may be from the second request, or the first parameter may be determined by the SF. The first duration may be from the second request, or the first duration may be determined by the SF.

After receiving the sixth indication information, the second sensing device may sense the target object. For example, after receiving the sixth indication information, the second sensing device may start to perform the sensing process, or the first sensing device may wait for specific duration after receiving the sixth indication information, and then execute the sensing process.

If the sixth indication information indicates the second sensing device being a sensing signal receive side, and/or indicates the first sensing device being a sensing signal transmit side, the second sensing device can determine a role of the second sensing device in the sensing process, that is, the second sensing device can determine that the second sensing device serves as the sensing signal receive side. Alternatively, if the sixth indication information neither indicates the second sensing device being a sensing signal receive side nor indicates the first sensing device being a sensing signal transmit side, it is equivalent that the SF does not indicate the role of the second sensing device. In this case, the second sensing device may determine the role of the second sensing device. For example, the second sensing device may determine the second sensing device being a sensing signal transmit side or the sensing signal receive side. In this embodiment of this application, an example in which the second sensing device is the sensing signal receive side is used. In the sensing process, the first sensing device may send a sensing signal to the target object located at the first location. After arriving at the target object, the sensing signal is reflected or refracted by the target object. The reflected or refracted signal (also referred to as a sensing signal) arrives at the second sensing device. The second sensing device may obtain sensing information based on the sensing signal, and may determine the parameter of the target object based on the sensing information. In a possible implementation, the sensing information may be understood as point cloud data obtained based on the sensing signal, and determining the parameter of the target object may be understood as processing or calculating the point cloud data to obtain the parameter like the location of the target object. A data form of the sensing information is not limited in embodiments of this application. An action of determining the parameter of the target object described in the following may be specifically understood as a process of processing or calculating a received sensing signal to obtain the parameter of the target object. Details are not described in the following.

Optionally, the method further includes S406: The first sensing device and the second sensing device sense the target object.

In this embodiment of this application, an example in which the first sensing device is the sensing signal transmit side and the second sensing device is the sensing signal receive side is used. In S406, the first sensing device may send a first sensing signal to the target object located at the first location. After arriving at the target object, the first sensing signal is reflected or refracted by the target object. The reflected or refracted signal is referred to as a second sensing signal. The second sensing signal arrives at the second sensing device, and the second sensing device may obtain sensing information based on the second sensing signal. Optionally, the second sensing device may determine the parameter of the target object based on the sensing information. For example, according to the foregoing descriptions, content indicated by the sixth indication information may include the first parameter. If the sixth indication information indicates the first parameter, the second sensing device may determine a part or all of parameters in the first parameter of the target object based on the sensing information. Alternatively, if the sixth indication information does not indicate the first parameter, the second sensing device may determine the parameter of the target object based on the sensing information. A specific determined parameter may be related to a capability of the second sensing device and/or the sensing information.

Alternatively, the second sensing device may send the sensing information to the SF. After receiving the sensing information, the SF may determine the parameter of the target object. For example, the second request from the AF indicates the first parameter, and the parameter that is of the target object and that is determined by the SF based on the sensing information may include a part or all of the parameters in the first parameter. Alternatively, if the second request does not indicate the first parameter, the SF may determine the parameter of the target object based on the sensing information. A specific determined parameter may be related to a capability of the SF and/or the sensing information.

Optionally, the parameter that is of the target object and that is determined by the SF or the second sensing device may include a movement trajectory of the target object, so that the SF or the second sensing device can determine whether the target object is located within the sensing area of the initial sensing device, or determine whether the target object has moved out of the sensing area of the initial sensing device. If the target object has moved out of or is about to move out of a sensing area of the first sensing device and/or a sensing area of the second sensing device, a device configured to sense the target object may be reselected.

In this embodiment of this application, the SF may select, based on the location of the target object, the device configured to sense the target object, so that the target object is located within a coverage area of the sensing device, and can be sensed. In addition, the SF performs selection, which facilitates management and scheduling on a terminal side by a network side.

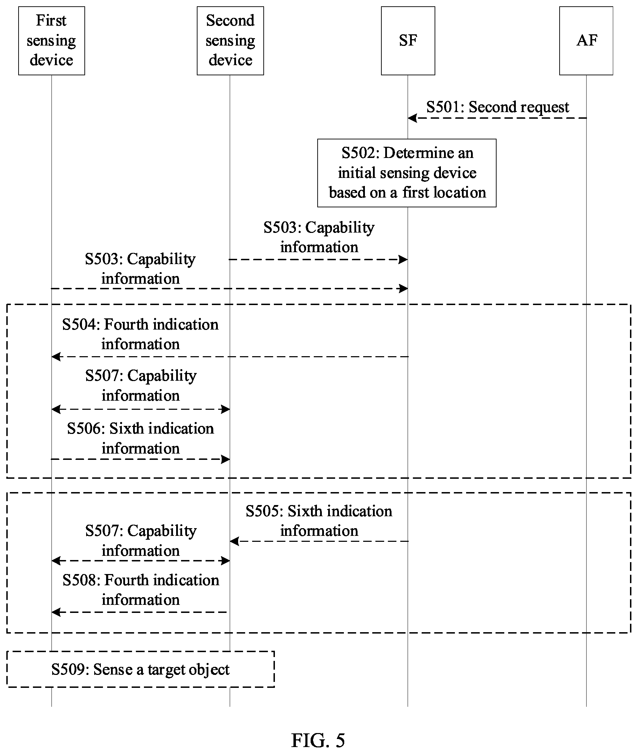

In the embodiment shown in FIG. 4, the SF selects the sensing device. The following embodiment of this application provides a second communication method. In the method, in addition to selecting one sensing device by an SF, the sensing device may further select the other sensing device. FIG. 5 is a flowchart of the method.

S501: An AF sends a second request to an SF. Correspondingly, the SF receives the second request from the AF.

For more content of S501, refer to S401 in the embodiment shown in FIG. 4.

S502: The SF determines an initial sensing device based on a first location, or the SF determines, based on a first location, an initial sensing device to sense the target object. In this case, the SF initially selects the sensing device to sense the target object. Therefore, the sensing device selected by the SF this time is referred to as an initial sensing device. In embodiments of this application, the initial sensing device may include a first sensing device or a second sensing device, where the first sensing device is a sensing signal transmit side, and the second sensing device is a sensing signal receive side. That is, the SF may select one of sensing devices participating in a sensing process.

Optionally, the SF may determine the initial sensing device. For example, if the SF obtains capability information of a sensing device, the SF may determine the initial sensing device. Optionally, the method may further include S503: At least one sensing device sends capability information to the SF, and correspondingly, the SF receives the capability information from the at least one sensing device. In this embodiment of this application, that both the first sensing device and the second sensing device send capability information to the SF is used as an example. For example, S503 may be performed before S502. For this part of content, refer to related descriptions of S402 and S403 in the embodiment shown in FIG. 4.

Alternatively, the SF may determine the initial sensing device via another device. For example, if the SF does not obtain the capability information of the sensing device, the SF may request another device to determine the initial sensing device. The another device is, for example, an NRF. Optionally, S403 may be replaced with that the at least one sensing device sends the capability information to the NRF, and correspondingly, the NRF receives the capability information from the at least one sensing device. For this part of content, refer to related descriptions of S402 and S403 in the embodiment shown in FIG. 4.

Optionally, the method further includes S504: The SF sends fourth indication information to the first sensing device, and correspondingly, the first sensing device receives the fourth indication information from the SF; or the method further includes S505: The SF sends sixth indication information to the second sensing device, and correspondingly, the second sensing device receives the sixth indication information from the SF. If the initial sensing device selected by the SF is the first sensing device, S504 may be performed; and if the initial sensing device selected by the SF is the second sensing device, S505 may be performed. For more content of S504, refer to related descriptions of S404 in the embodiment shown in FIG. 4. For more content of S505, refer to related descriptions of S405 in the embodiment shown in FIG. 4.

If S504 is performed but S505 is not performed, optionally, the method may further include S506: The first sensing device sends sixth indication information to the second sensing device, and correspondingly, the second sensing device receives the sixth indication information from the first sensing device. It may be understood that, if the SF selects the sensing signal transmit side (the first sensing device) but does not select the sensing signal receive side, the first sensing device may select the sensing signal receive side. For example, the fourth indication information may indicate the first sensing device to select the sensing signal receive side; or the fourth indication information does not include information indicating the first sensing device to select the sensing signal receive side, but the fourth indication information does not indicate the second sensing device (for example, neither indicates an identifier of the second sensing device nor indicates the second sensing device being a sensing signal receive side). After receiving the fourth indication information, the first sensing device determines that the SF does not select the sensing signal receive side, and the first sensing device may select the sensing signal receive side. For example, the first sensing device may select the sensing device based on the first location and capability information of one or more sensing devices. For example, the first sensing device selects the second sensing device. Optionally, the method may further include S507: Sensing devices exchange capability information. For example, S507 occurs before S505. In addition, an occurrence sequence of S507 and a step other than S505 is not limited, for example, S507 occurs after or before the another step, or S507 and the another step occur at the same time. For example, in S507, the first sensing device sends capability information of the first sensing device to one or more sensing devices, and in addition, the first sensing device also receives capability information from the one or more sensing devices. In this case, based on S507, the first sensing device can obtain the capability information of the one or more sensing devices, so that the second sensing device can be determined based on the capability information of the one or more sensing devices. For example, the one or more sensing devices include the second sensing device. In S507 in FIG. 5, an example in which the first sensing device exchanges capability information with the second sensing device is used.

After selecting the second sensing device, the first sensing device may send the sixth indication information to the second sensing device. After receiving the sixth indication information, the second sensing device may sense the target object. For example, after receiving the sixth indication information, the second sensing device may start to perform the sensing process, or the second sensing device may wait for specific duration after receiving the sixth indication information, and then execute the sensing process. For more content of the sixth indication information, refer to related descriptions of the embodiment shown in FIG. 4.

Alternatively, if S505 is performed but S504 is not performed, optionally, the method may further include S508: The second sensing device sends fourth indication information to the first sensing device, and correspondingly, the first sensing device receives the fourth indication information from the second sensing device. It may be understood that, if the SF selects the sensing signal receive side (the second sensing device) but does not select the sensing signal transmit side, the second sensing device may select the sensing signal transmit side. For example, the sixth indication information may indicate the second sensing device to select the sensing signal transmit side; or the sixth indication information does not include information indicating the second sensing device to select the sensing signal transmit side, but the sixth indication information does not indicate the first sensing device (for example, neither indicates an identifier of the first sensing device nor indicates the first sensing device being a sensing signal transmit side). After receiving the sixth indication information, the second sensing device determines that the SF does not select the sensing signal transmit side. In this case, the second sensing device may determine the sensing signal transmit side. For example, the second sensing device may select the sensing device based on the first location and the capability information of one or more sensing devices. For example, the second sensing device selects the first sensing device. In this case, optionally, the method may also include S507. Details are not described again.

After selecting the first sensing device, the second sensing device may send fourth indication information to the first sensing device. After receiving the fourth indication information, the first sensing device may sense the target object. For example, after receiving the fourth indication information, the first sensing device may start to perform the sensing process, or the first sensing device may wait for specific duration after receiving the fourth indication information, and then execute the sensing process. For more content of the fourth indication information, refer to related descriptions of the embodiment shown in FIG. 4.

Optionally, the method further includes S509: The first sensing device and the second sensing device sense the target object. For more content of S509, refer to S406 in the embodiment shown in FIG. 4.

In this embodiment of this application, the SF may select, based on a location of the target object, the device configured to sense the target object, so that the target object is located within a coverage area of the sensing device, and can be sensed. In addition, one sensing device may select the other sensing device, so that participation of a network side is reduced, selection flexibility is improved, and a delay in a selection process is reduced, thereby facilitating continuous sensing of a target.

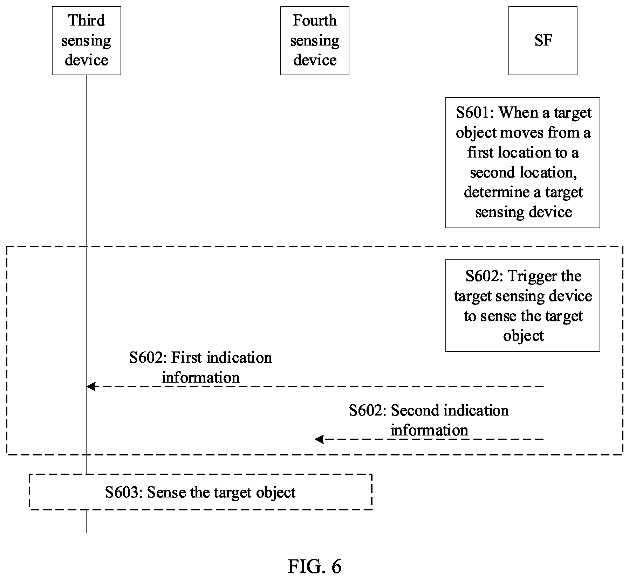

The foregoing embodiment shown in FIG. 4 or FIG. 5 describes a process of initially selecting the device for sensing the target object. However, when the target object moves, the target object may move out of a coverage area of the initial sensing device. Therefore, embodiments of this application propose that if the target object moves, the sensing device may be reselected, so that the target object can be continuously sensed. The following describes a process of reselecting the sensing device in some embodiments. An embodiment shown in any one of FIG. 6 to FIG. 10 to be described in the following may be combined with the embodiment shown in FIG. 4. For example, the method provided in an embodiment shown in any one of the accompanying drawings occurs after S406 in the embodiment shown in FIG. 4. Alternatively, an embodiment shown in any one of FIG. 6 to FIG. 10 to be described in the following may be combined with the embodiment shown in FIG. 5. For example, the method provided in an embodiment shown in any one of the accompanying drawings occurs after S509 in the embodiment shown in FIG. 5. In a process of describing embodiments in the following, steps in the embodiment shown in FIG. 4 or FIG. 5 are not described in detail, and other steps in the following embodiments are mainly described.

FIG. 6 is a flowchart of a third communication method according to an embodiment of this application. The method describes a process of reselecting a sensing device.

S601: When a target object moves from a first location to a second location, an SF determines a target sensing device.

The target sensing device in this embodiment of this application includes a third sensing device and/or a fourth sensing device. The fourth sensing device is a new sensing signal transmit side, and the fourth sensing device is a new sensing signal receive side. That is, the SF may reselect two sensing devices participating in a sensing process. The second location is located within a sensing area of the target sensing device. For example, the third sensing device may be configured to replace an original sensing signal transmit side (for example, a first sensing device), and the fourth sensing device may be configured to replace an original sensing signal receive side (for example, a second sensing device).

Optionally, the SF determines a parameter of the target object, and determines, based on the parameter of the target object, that the target object moves from the first location to the second location; or the second sensing device determines a parameter of the target object, the second sensing device sends the determined parameter of the target object to the SF, and the SF determines, based on the parameter of the target object, that the target object moves from the first location to the second location. For example, the SF may determine a movement trajectory of the target object based on the second location, and the SF determines, based on the movement trajectory, that the target object moves from the first location to the second location. The SF may determine the target sensing device. For example, the SF may determine the target sensing device based on the movement trajectory (or the second location) and capability information that is of at least one sensing device and that is stored in the SF. Alternatively, the SF may request another device (for example, a device like an NRF) to determine the target sensing device. For example, the SF may send a first request to the NRF. The first request may be used to request information about a device for sensing the target object, and the first request includes information about the second location or information about the movement trajectory. After receiving the first request, the NRF may determine the target sensing device based on the capability information of the at least one sensing device and the second location. The sensing area of the target sensing device determined by the NRF can cover the second location. The NRF may send a first response to the SF. The first response includes information about the target sensing device, so that the SF determines the target sensing device. The at least one sensing device may include the target sensing device. For more descriptions of a process in which the SF determines the target sensing device, refer to the process in which the SF determines the initial sensing device in S402.

S602: The SF triggers the target sensing device to sense the target object. The target sensing device includes the third sensing device and/or the fourth sensing device.
1. If the target sensing device includes the third sensing device, optionally, in S602, the SF may send first indication information to the third sensing device. Correspondingly, the third sensing device receives the first indication information from the SF. The first indication information may trigger the third sensing device to sense the target object.

If the SF determines that the target object is about to move out of or has moved out of a sensing area of the second sensing device, but does not move out of a sensing area of the first sensing device or a probability that the target object moves out of the sensing area of the first sensing device is low, the SF may determine the new sensing signal receive side, for example, determine the fourth sensing device. In this case, it may be considered that the target sensing device includes the fourth sensing device but does not include the third sensing device, or it may be considered that the target sensing device includes the third sensing device and the fourth sensing device, and the third sensing device is the first sensing device. In this case, the SF may not send the first indication information to the third sensing device.

Alternatively, if the SF determines that the target object is about to move out of or has moved out of the sensing area of the second sensing device, but does not move out of the sensing area of the first sensing device or the probability that the target object moves of the sensing area of the first sensing device is low, the SF may originally determine the new sensing signal receive side, but the SF may indicate the first sensing device to perform role switching, for example, indicate the first sensing device to be the sensing signal receive side, or indicate the first sensing device to change to the sensing signal receive side. In this case, the SF may determine the new sensing signal transmit side, for example, determine the third sensing device. In this case, it may be considered that the target sensing device includes the third sensing device, or includes the first sensing device (for example, the fourth sensing device is the first sensing device) and the third sensing device, and the third sensing device is not the first sensing device. In this case, the SF may send the first indication information to the third sensing device. In this case, the first indication information may indicate one or more of the following: the third sensing device being a sensing signal transmit side, an identifier of the first sensing device, the first sensing device being a sensing signal receive side, the second location, a first parameter, or first duration. Optionally, in this case, the SF may further send tenth indication information to the first sensing device, where the tenth indication information may indicate one or more of the following: an identifier of the third sensing device, the third sensing device being a sensing signal transmit side, the first sensing device being a sensing signal receive side, or the second location. It may be understood that, the tenth indication information is sent to the first sensing device, so that the first sensing device knows that the other sensing device participating in the sensing process has changed, and knows that a role of the first sensing device has also changed.

Alternatively, if the SF determines that the target object is about to move out of or has moved out of the sensing area of the first sensing device, the SF may determine the new sensing signal transmit side, for example, determine the third sensing device. In this case, it may be considered that the target sensing device includes the third sensing device, and the third sensing device is not the first sensing device. In this case, the SF may send first indication information to the third sensing device. In this case, if the SF determines that the target object is also about to move out of or has moved out of the sensing area of the second sensing device, the SF may also determine the new sensing signal receive side, for example, determine the fourth sensing device. In this case, it may be considered that the target sensing device includes the third sensing device and the fourth sensing device, where the third sensing device is not the first sensing device, and the fourth sensing device is not the second sensing device either. The first indication information may indicate one or more of the following: the third sensing device being a sensing signal transmit side, an identifier of the fourth sensing device, the fourth sensing device being a sensing signal receive side, the second location, a first parameter, or first duration.

Alternatively, in this case, if the SF determines that the target object does not move out of the sensing area of the second sensing device or a probability that the target object moves out of the sensing area of the second sensing device is low, the second sensing device continues to perform sensing. In this case, it is considered that the target sensing device includes the third sensing device but does not include the fourth sensing device, or it may be considered that the target sensing device includes the third sensing device and the fourth sensing device, where the third sensing device is not the first sensing device, and the fourth sensing device is the second sensing device. In this case, the first indication information may indicate one or more of the following: the third sensing device being a sensing signal transmit side, an identifier of the second sensing device, the second sensing device being a sensing signal receive side, the second location, a first parameter, or first duration. Optionally, the SF may further send eighth indication information to the second sensing device, where the eighth indication information may indicate one or more of the following: an identifier of the third sensing device, the third sensing device being a sensing signal transmit side, the second sensing device being a sensing signal receive side, or the second location. It may be understood that, the eighth indication information is sent to the second sensing device, so that the second sensing device knows that the other sensing device participating in the sensing process has changed.

As mentioned above, the sensing device may change a role, for example, change from the sensing signal transmit side to the sensing signal receive side, or change from the sensing signal receive side to the sensing signal transmit side. Optionally, the SF may determine, based on factors such as performance of the sensing device and/or a movement trajectory of the target object, whether to change the role of the sensing device. For example, because the sensing signal receive side needs to obtain sensing information, and may further need to determine a parameter of the target object based on the sensing information, the sensing signal receive side plays an important role. Therefore, the sensing signal receive side may be required to have good performance. In this case, for example, if performance of the second sensing device is not good enough, the SF may decide to switch the second sensing device to the sensing signal transmit side, and then reselect a sensing signal receive side with better performance. Alternatively, because the sensing signal receive side is important, it is expected that the sensing signal receive side uses an original device as much as possible, to improve tracking continuity. For example, if the SF determines, based on the movement trajectory of the target object, that the target object is currently far away from the sensing signal receive side, the SF may originally reselect the sensing signal receive side instead of the sensing signal transmit side. However, if the SF further determines that the target object may be gradually away from the sensing signal transmit side subsequently, the sensing signal transmit side may need to be reselected in a next step. To reduce replaced devices, the SF may switch the current sensing signal transmit side into the sensing signal receive side, and then reselect the sensing signal transmit side.

The first parameter indicated by the first indication information may be from a second request, or the first parameter may be determined by the SF. The first duration indicated by the first indication information may be from the second request, or the first duration may be determined by the SF.

After receiving the first indication information, the third sensing device may sense the target object. For example, after receiving the first indication information, the third sensing device may start to perform the sensing process, or the third sensing device may wait for specific duration after receiving the first indication information, and then execute the sensing process.

If the first indication information indicates the third sensing device being a sensing signal transmit side, and/or indicates that the fourth sensing device (or the second sensing device, or the first sensing device) is the sensing signal receive side, the third sensing device can determine a role of the third sensing device in the sensing process, that is, the third sensing device can determine that the third sensing device serves as the sensing signal transmit side. Alternatively, if the first indication information neither indicates that the third sensing device is the sensing signal transmit side nor indicates that another sensing device is the sensing signal receive side, it is equivalent that the SF does not indicate the role of the third sensing device. In this case, the third sensing device may determine the role of the third sensing device. For example, the third sensing device may determine that the third sensing device is the sensing signal transmit side or the sensing signal receive side. In this embodiment of this application, an example in which the third sensing device is the sensing signal transmit side is used. In the sensing process, the third sensing device may send a sensing signal to the target object located at the second location. After arriving at the target object, the sensing signal is reflected or refracted by the target object. The reflected or refracted signal (also referred to as a sensing signal) arrives at the fourth sensing device (or the second sensing device, or the first sensing device). The fourth sensing device may obtain the sensing information based on the sensing signal, and may determine the parameter of the target object based on the sensing information.

2. If the target sensing device includes the fourth sensing device, optionally, in S602, the SF may send second indication information to the fourth sensing device. Correspondingly, the fourth sensing device receives the second indication information from the SF. The second indication information may trigger the fourth sensing device to sense the target object.

If the SF determines that the target object is about to move out of or has moved out of the sensing area of the first sensing device, but does not move out of the sensing area of the second sensing device or a probability that the target object moves out of the sensing area of the second sensing device is low, the SF may determine the new sensing signal transmit side, for example, determine the third sensing device. In this case, it may be considered that the target sensing device includes the third sensing device but does not include the fourth sensing device, or it may be considered that the target sensing device includes the third sensing device and the fourth sensing device, and the fourth sensing device is the second sensing device. In this case, the SF may not send the second indication information to the fourth sensing device.

Alternatively, if the SF determines that the target object is about to move out of or has moved out of the sensing area of the first sensing device, but does not move out of the sensing area of the second sensing device or a probability that the target object moves out of the sensing area of the second sensing device is low, the SF may originally determine the new sensing signal transmit side, but the SF may indicate the second sensing device to perform role switching, for example, indicate the second sensing device to be the sensing signal transmit side, or indicate the second sensing device to change to the sensing signal transmit side. In this case, the SF may determine the new sensing signal receive side, for example, determine the fourth sensing device. In this case, it may be considered that the target sensing device includes the fourth sensing device, or includes the second sensing device (for example, the third sensing device is the second sensing device) and the fourth sensing device, and the fourth sensing device is not the second sensing device. In this case, the second indication information may indicate one or more of the following: the fourth sensing device being a sensing signal receive side, the identifier of the second sensing device, the second sensing device being a sensing signal transmit side, the second location, the first parameter, or the first duration. In this case, the SF may send the second indication information to the fourth sensing device. Optionally, in this case, the SF may further send eighth indication information to the second sensing device, where the eighth indication information may indicate one or more of the following: the identifier of the fourth sensing device, the fourth sensing device being a sensing signal receive side, the second sensing device being a sensing signal transmit side, or the second location. It may be understood that, the eighth indication information is sent to the second sensing device, so that the second sensing device knows that the other sensing device participating in the sensing process has changed, and knows that a role of the second sensing device has also changed.

Alternatively, if the SF determines that the target object is about to move out of or has moved out of the sensing area of the second sensing device, the SF may determine the new sensing signal receive side, for example, determine the fourth sensing device. In this case, it may be considered that the target sensing device includes the fourth sensing device, and the fourth sensing device is not the second sensing device. In this case, the SF may send the second indication information to the fourth sensing device. In this case, if the SF determines that the target object is also about to move out of or has moved out of the sensing area of the first sensing device, the SF may also determine the new sensing signal transmit side, for example, determine the third sensing device. In this case, it may be considered that the target sensing device includes the third sensing device and the fourth sensing device, where the third sensing device is not the first sensing device, and the fourth sensing device is not the second sensing device. In this case, the second indication information may indicate one or more of the following: the fourth sensing device being a sensing signal receive side, the identifier of the third sensing device, the third sensing device being a sensing signal transmit side, the second location, the first parameter, or the first duration.

Alternatively, in this case, if the SF determines that the target object does not move out of the sensing area of the first sensing device or a probability that the target object moves out of the sensing area of the first sensing device is low, the first sensing device continues to perform sensing. In this case, it is considered that the target sensing device includes the fourth sensing device but does not include the third sensing device, or it may be considered that the target sensing device includes the third sensing device and the fourth sensing device, where the fourth sensing device is not the second sensing device, and the third sensing device is the first sensing device. In this case, the second indication information may indicate one or more of the following: the fourth sensing device being a sensing signal receive side, the identifier of the first sensing device, the first sensing device being a sensing signal transmit side, the second location, the first parameter, or the first duration. Optionally, the SF may further send tenth indication information to the first sensing device, where the tenth indication information may indicate one or more of the following: the identifier of the fourth sensing device, the fourth sensing device being a sensing signal receive side, the first sensing device being a sensing signal transmit side, or the second location. It may be understood that, the tenth indication information is sent to the first sensing device, so that the first sensing device knows that the other sensing device participating in the sensing process has changed.

The first parameter indicated by the second indication information may be from the second request, or the first parameter may be determined by the SF. The first duration indicated by the second indication information may be from the second request, or the first duration may be determined by the SF.

After receiving the second indication information, the fourth sensing device may sense the target object. For example, after receiving the second indication information, the fourth sensing device may start to perform the sensing process, or the fourth sensing device may wait for specific duration after receiving the second indication information, and then execute the sensing process.

If the second indication information indicates the fourth sensing device being a sensing signal receive side, and/or indicates that the third sensing device (or the second sensing device, or the first sensing device) is the sensing signal transmit side, the fourth sensing device can determine a role of the fourth sensing device in the sensing process, that is, the fourth sensing device can determine that the fourth sensing device serves as the sensing signal receive side. Alternatively, if the second indication information neither indicates the fourth sensing device being a sensing signal receive side nor indicates that the third sensing device is the sensing signal transmit side, it is equivalent that the SF does not indicate the role of the fourth sensing device. In this case, the fourth sensing device may determine the role of the fourth sensing device. For example, the fourth sensing device may determine the fourth sensing device being a sensing signal transmit side or the sensing signal receive side. In this embodiment of this application, an example in which the fourth sensing device is the sensing signal receive side is used. In the sensing process, the third sensing device (or the second sensing device, or the first sensing device) may send the sensing signal to the target object located at the second location. After arriving at the target object, the sensing signal is reflected or refracted by the target object. The reflected or refracted signal (also referred to as a sensing signal) arrives at the fourth sensing device. The fourth sensing device may obtain the sensing information based on the sensing signal, and may determine the parameter of the target object based on the sensing information. Optionally, if the target sensing device selected by the SF includes the third sensing device, and the third sensing device is not the original sensing signal transmit side, which is equivalent to replacing the original sensing signal transmit side with the third sensing device, the SF may send third indication information to the original sensing signal transmit side (for example, the first sensing device). The third indication information may indicate to stop sensing the target object. After receiving the third indication information, the first sensing device may stop sensing the target object. For example, the SF selects the third sensing device, and the SF may send the third indication information to the first sensing device immediately after selecting the third sensing device, or the SF may send the third indication information to the first sensing device when the target object moves out of the sensing area of the first sensing device.

Similarly, if the target sensing device includes the fourth sensing device, and the third sensing device is not the original sensing signal receive side, which is equivalent to replacing the original sensing signal receive side with the fourth sensing device, the SF may send the third indication information to the original sensing signal receive side (for example, the second sensing device). The third indication information may indicate to stop sensing the target object. After receiving the third indication information, the second sensing device may stop sensing the target object. For example, the SF selects the fourth sensing device, and the SF may send the third indication information to the second sensing device immediately after selecting the fourth sensing device, or the SF may send the third indication information to the second sensing device when the target object moves out of the sensing area of the second sensing device.

Optionally, the method may further include S603: The third sensing device and the fourth sensing device sense the target object.

In this embodiment of this application, an example in which the third sensing device is the sensing signal transmit side and the fourth sensing device is the sensing signal receive side is used. In S603, the third sensing device may send a third sensing signal to the target object located at the second location. After arriving at the target object, the third sensing signal is reflected or refracted by the target object. The reflected or refracted signal is referred to as a fourth sensing signal. The fourth sensing signal arrives at the fourth sensing device, and the fourth sensing device may obtain the sensing information based on the fourth sensing signal. Optionally, the fourth sensing device may determine the parameter of the target object based on the sensing information. For example, if the second indication information indicates the first parameter, the fourth sensing device may determine a part or all of parameters in the first parameter of the target object based on the sensing information; or if the second indication information does not indicate the first parameter, the fourth sensing device may determine a part or all of parameters of the target object based on the sensing information. A specific determined parameter may be related to a capability of the fourth sensing device and/or the sensing information.

Alternatively, the fourth sensing device may send the sensing information to the SF, and after receiving the sensing information, the SF may determine the parameter of the target object. For example, if the second request from the AF indicates the first parameter, the SF may determine a part or all of parameters in the first parameter of the target object based on the sensing information; or if the second request does not indicate the first parameter, the SF may determine a part or all of parameters of the target object based on the sensing information. A specific determined parameter may be related to a capability of the SF and/or the sensing information.

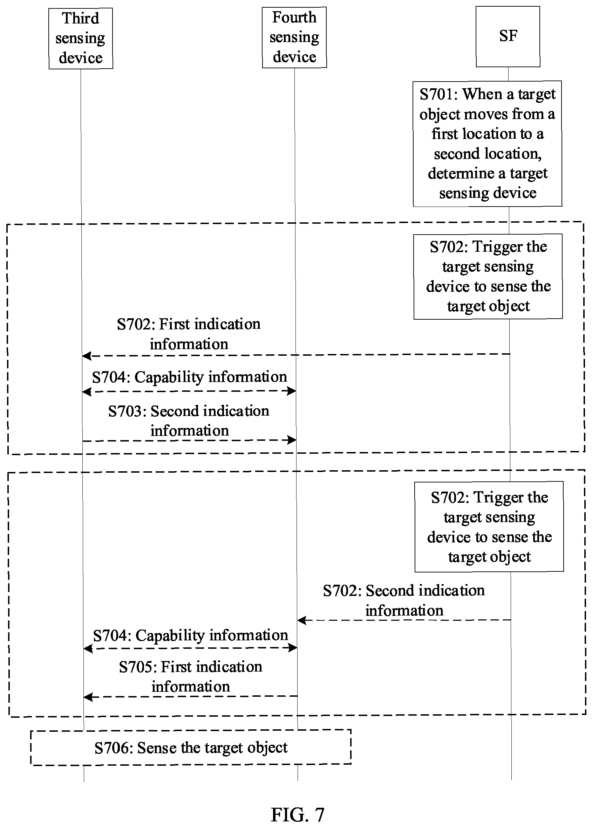

Optionally, the parameter that is of the target object and that is determined by the SF or the second sensing device may further include the movement trajectory of the target object, so that the SF or the second sensing device can continue to determine whether the target object is located within a sensing area of the initial sensing device, or determine whether the target object has moved out of the sensing area of the target sensing device. If the target object has moved out of or is about to move out of the sensing area of the third sensing device and/or the sensing area of the fourth sensing device, the device configured to sense the target object may be reselected. For a reselection process, refer to FIG. 6 or a process of selecting a target sensing device in an embodiment shown in any one of FIG. 7 to FIG. 10 to be described in the following.

In this embodiment of this application, when the target object changes from the first location to the second location, the target object may have left or is about to leave the sensing area of the original sensing device (the first sensing device and/or the second sensing device). In this case, the SF may determine the new sensing device, namely, the target sensing device, based on a new location (the second location) of the target object, so that the target sensing device can continue to sense the target object. In this way, even if the target object moves, in this embodiment of this application, the target object can still be continuously sensed, so that a probability of sensing interruption is reduced, information about the target object can be obtained in time, and continuity and a success rate of sensing the target object are improved. In addition, in this embodiment of this application, the SF may select the sensing device, so that the network side manages and schedules the terminal side.

In the embodiment shown in FIG. 6, the SF reselects the sensing device. The following embodiment of this application provides a fourth communication method. In the method, in addition to selecting one sensing device by the SF, the sensing device may further select the other sensing device. FIG. 7 is a flowchart of the method.

S701: When a target object moves from a first location to a second location, an SF determines a target sensing device.

For details of S701, refer to content of S601 in the embodiment shown in FIG. 6. Details are not described herein again.

S702: The SF triggers the target sensing device to sense the target object. The target sensing device includes a third sensing device or a fourth sensing device.

If the target sensing device selected by the SF is the third sensing device, optionally, in S702, the SF may send first indication information to the third sensing device. Correspondingly, the third sensing device receives the first indication information from the SF. The first indication information may trigger the third sensing device to sense the target object. For more descriptions of this part of content, refer to the first point of S602 in the embodiment shown in FIG. 6.

Alternatively, if the target sensing device selected by the SF is the fourth sensing device, optionally, in S702, the SF may send second indication information to the fourth sensing device. Correspondingly, the fourth sensing device receives the second indication information from the SF. The second indication information may trigger the fourth sensing device to sense the target object. For more descriptions of this part of content, refer to the second point of S602 in the embodiment shown in FIG. 6.

If the target sensing device selected by the SF is the third sensing device, optionally, the method may further include S703: The third sensing device sends second indication information to the fourth sensing device, and correspondingly, the fourth sensing device receives the second indication information from the third sensing device. It may be understood that, if the SF selects a sensing signal transmit side (the third sensing device) but does not select the sensing signal receive side, the third sensing device may select a sensing signal receive side. For example, the first indication information may indicate the third sensing device to select the sensing signal receive side; or the first indication information does not include information indicating the third sensing device to select the sensing signal receive side, but the first indication information does not indicate the fourth sensing device (for example, neither indicates an identifier of the fourth sensing device nor indicates the fourth sensing device being a sensing signal receive side). After receiving the first indication information, the third sensing device determines that the SF does not select the sensing signal receive side, and the third sensing device may select the sensing signal receive side. For example, the third sensing device may select the sensing device based on the second location and capability information of one or more sensing devices. For example, the third sensing device selects the fourth sensing device. Optionally, the method may further include S704: Sensing devices exchange capability information. An occurrence sequence of S704 and the foregoing steps is not limited. For example, S704 occurs after or before any one of the foregoing steps, or occurs at the same time with any one of the foregoing steps. For example, in S704, the third sensing device sends capability information of the third sensing device to the one or more sensing devices. In addition, the third sensing device also receives capability information from the one or more sensing devices. In this case, based on S704, the third sensing device can obtain the capability information of the one or more sensing devices, to determine the fourth sensing device based on the capability information of the one or more sensing devices. For example, the one or more sensing devices include the fourth sensing device. In S704 in FIG. 7, an example in which the third sensing device exchanges capability information with the fourth sensing device is used. Optionally, if this embodiment of this application is combined with the embodiment shown in FIG. 5, S704 and S503 may be a same step.

After selecting the fourth sensing device, the third sensing device may send second indication information to the fourth sensing device. After receiving the second indication information, the fourth sensing device may sense the target object. For example, after receiving the second indication information, the fourth sensing device may start to perform the sensing process, or the fourth sensing device may wait for specific duration after receiving the second indication information, and then execute the sensing process. For more content of the second indication information, refer to related descriptions of the embodiment shown in FIG. 6.

Alternatively, if the target sensing device selected by the SF is the fourth sensing device, optionally, the method may further include S705: The fourth sensing device sends first indication information to the third sensing device, and correspondingly, the third sensing device receives the first indication information from the fourth sensing device. It may be understood that, if the SF selects the sensing signal receive side (the fourth sensing device) but does not select the sensing signal transmit side, the fourth sensing device may select the sensing signal transmit side. For example, the second indication information may indicate the fourth sensing device to select the sensing signal transmit side; or the second indication information does not include information indicating the fourth sensing device to select the sensing signal transmit side, but the second indication information does not indicate the third sensing device (for example, neither indicates an identifier of the third sensing device nor indicates that the third sensing device is the sensing signal receive side). After receiving the second indication information, the fourth sensing device determines that the SF does not select the sensing signal transmit side, and the fourth sensing device may select the sensing signal transmit side. For example, the fourth sensing device may select the sensing device based on the second location and the capability information of the one or more sensing devices. For example, the fourth sensing device selects the third sensing device. Optionally, the method may further include S704. Details are not described again.

After selecting the third sensing device, the fourth sensing device may send first indication information to the third sensing device. After receiving the first indication information, the third sensing device may sense the target object. For example, after receiving the first indication information, the third sensing device may start to perform the sensing process, or the third sensing device may wait for specific duration after receiving the first indication information, and then execute the sensing process. For more content of the first indication information, refer to related descriptions of the embodiment shown in FIG. 6.

Optionally, if the target sensing device selected by the SF is the third sensing device, and the third sensing device selects the fourth sensing device, the third sensing device may send third indication information to the original sensing signal receive side (for example, the second sensing device). The third indication information may indicate to stop sensing the target object. After receiving the third indication information, the second sensing device may stop sensing the target object. For example, the third sensing device may send the third indication information to the second sensing device immediately after selecting the fourth sensing device, or the third sensing device may send the third indication information to the second sensing device when the target object moves out of the sensing area of the second sensing device.

Alternatively, if the target sensing device selected by the SF is the fourth sensing device, and the fourth sensing device selects the third sensing device, the fourth sensing device may send the third indication information to the original sensing signal transmit side (for example, the first sensing device). The third indication information may indicate to stop sensing the target object. After receiving the third indication information, the first sensing device may stop sensing the target object. For example, the fourth sensing device may send the third indication information to the first sensing device immediately after selecting the third sensing device, or the fourth sensing device may send the third indication information to the first sensing device when the target object moves out of the sensing area of the first sensing device.

Optionally, the method may further include S706: The third sensing device and the fourth sensing device sense the target object. For more content of S706, refer to S603 in the embodiment shown in FIG. 6.

In this embodiment of this application, when the target object changes from the first location to the second location, the target object may have left or is about to leave the sensing area of the original sensing device (the first sensing device and/or the second sensing device). In this case, a new sensing device, namely, the target sensing device, may be determined based on a new location (the second location) of the target object, so that the target sensing device can continue to sense the target object. In this way, even if the target object moves, in this embodiment of this application, the target object can still be continuously sensed, so that a probability of sensing interruption is reduced, information about the target object can be obtained in time, and continuity and a success rate of sensing the target object are improved. In addition, in this embodiment of this application, one sensing device may select the other sensing device, so that participation of a network side is reduced, selection flexibility is improved, and a delay in a selection process can be reduced, thereby facilitating continuous sensing of a target.

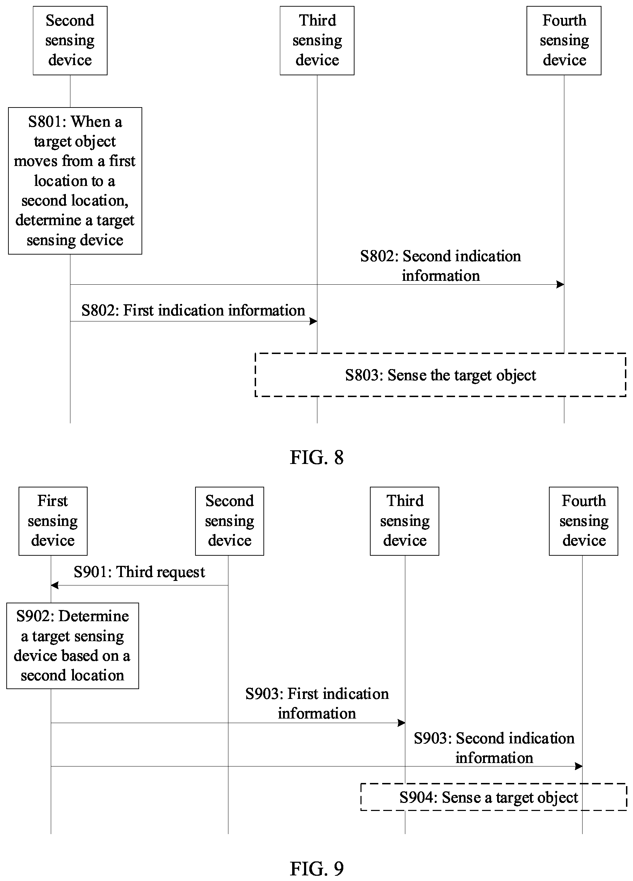

In the embodiment shown in FIG. 6 or FIG. 7, when a location of the target object changes, the SF participates in reselecting the sensing device. In addition, an embodiment of this application provides a fifth communication method. In the method, when a location of a target object changes, an original sensing device may reselect a sensing device. FIG. 8 is a flowchart of the method.

S801: When a target object moves to a second location, a second sensing device determines a target sensing device.

The target sensing device includes a third sensing device and/or a fourth sensing device. The third sensing device is a new sensing signal transmit side, and the fourth sensing device is a new sensing signal receive side. The second location is located within a sensing area of the target sensing device. That is, when the target object moves from a first location to the second location, the second sensing device may determine a new sensing device. The third sensing device may be configured to replace an original sensing signal transmit side (for example, a first sensing device), and the fourth sensing device may be configured to replace an original sensing signal receive side (for example, the second sensing device).

Before S801, the second sensing device receives a second sensing signal reflected or refracted by the target object. The second sensing signal is a signal obtained after the first sensing device sends a first sensing signal to the target object and the first sensing signal is reflected or refracted after arriving at the target object (that is, the second sensing signal is used by the second sensing device and the first sensing device to sense the target object). It may be understood that before the first sensing signal is sent, the target object is located at the first location, or the first sensing device and/or the second sensing device consider/considers that the target object is located at the first location.

The second sensing device determines, based on the second sensing signal, that the target object moves to the second location, or determines that the target object moves from the first location to the second location. Specifically, the second sensing device may determine sensing information based on the sensing signal, and determine a parameter of the target object based on the sensing information. The parameter includes the second location, that is, it is determined that the target object moves to the second location. Alternatively, the second sensing device may determine the sensing information based on the sensing signal, and send the sensing information to an SF or another network device, so that the SF or the another network device determines the parameter of the target object based on the sensing information, where the parameter includes the second location, and sends the parameter to the second sensing device. In this way, the second sensing device determines that the target object moves to the second location. The foregoing parameter may include a movement trajectory of the target object, and the target object in the movement trajectory is currently located at the second location. It may be determined, based on the movement trajectory, that the target object moves from the first location to the second location.

For more descriptions of a process in which the second sensing device determines the new sensing signal transmit side, refer to the process in which the second sensing device determines the first sensing device in S508 in the embodiment shown in FIG. 5. For more description of the process in which the second sensing device determines the new sensing signal receive side, refer to the process in which the second sensing device determines the first sensing device in S508 in the embodiment shown in FIG. 5, where the first sensing device is replaced with a receive side of another sensing device.

S802: The second sensing device triggers the target sensing device to sense the target object. The target sensing device includes the third sensing device and/or the fourth sensing device.
1. If the target sensing device includes the third sensing device, optionally, in S802, the second sensing device may send first indication information to the third sensing device. Correspondingly, the third sensing device receives the first indication information from the second sensing device. The first indication information may trigger the third sensing device to sense the target object. For details of the process, refer to the content of a branch 1 of S602 in the embodiment shown in FIG. 6, where the SF is replaced with the second sensing device.

A first parameter indicated by the first indication information may be from the SF, for example, included in the sixth indication information described in the embodiment shown in FIG. 4 or FIG. 5, or the first parameter may be determined by the second sensing device. First duration indicated by the first indication information may be from sixth indication information, or the first duration may be determined by the second sensing device.

After receiving the first indication information, the third sensing device may sense the target object. For example, after receiving the first indication information, the third sensing device may start to perform a sensing process, or the third sensing device may wait for specific duration after receiving the first indication information, and then execute the sensing process.

The first indication information may indicate a sensing device that serves as the sensing signal receive side, for example, indicate the fourth sensing device (or the second sensing device, or the first sensing device), for example, indicate an identifier of the fourth sensing device, and/or indicate the fourth sensing device being a sensing signal receive side. Alternatively, the first indication information may not indicate the fourth sensing device. For example, if the target sensing device selected by the second sensing device includes the third sensing device but does not include the fourth sensing device, the first indication information does not indicate the fourth sensing device. In this case, optionally, the third sensing device may select the other sensing device in a current sensing process. For example, the third sensing device may select the sensing device based on capability information of one or more sensing devices. For example, the third sensing device selects the fourth sensing device. For more details, refer to the process of selecting the other sensing device by the first sensing device in the embodiment shown in FIG. 5.

2. If the target sensing device includes the fourth sensing device, optionally, in S802, the second sensing device may send second indication information to the fourth sensing device. Correspondingly, the fourth sensing device receives the second indication information from the second sensing device. The second indication information may trigger the fourth sensing device to sense the target object. For details of the process, refer to the content of a branch 2 of S602 in the embodiment shown in FIG. 6, where the SF is replaced with the second sensing device. In S802 in FIG. 8, an example in which the second sensing device sends the first indication information to the third sensing device and sends the second indication information to the fourth sensing device is used.

The first parameter indicated by the second indication information may be from the second request, or the first parameter may be determined by the SF. The first duration indicated by the second indication information may be from the second request, or the first duration may be determined by the SF.

After receiving the second indication information, the fourth sensing device may sense the target object. For example, after receiving the second indication information, the fourth sensing device may start to perform the sensing process, or the fourth sensing device may wait for specific duration after receiving the second indication information, and then execute the sensing process.

The second indication information may indicate the third sensing device (or the second sensing device, or the first sensing device), for example, indicate an identifier of the third sensing device, and/or indicate that the third sensing device is the sensing signal transmit side. Alternatively, the second indication information may not indicate the third sensing device. For example, if an initial sensing device selected by the second sensing device includes the fourth sensing device but does not include the third sensing device, the second indication information does not indicate the third sensing device. In this case, optionally, the fourth sensing device may select the other sensing device in the current sensing process. For example, the fourth sensing device may select the sensing device based on capability information of one or more sensing devices. For example, the fourth sensing device selects the third sensing device. For more details, refer to the foregoing process of selecting the other sensing device by the second sensing device.

In S801, the second sensing device determines the target sensing device. If the target sensing device includes the third sensing device, and the third sensing device is not the first sensing device, the second sensing device may send first indication information to the third sensing device, and the first indication information may indicate the third sensing device to sense the target object. If the target sensing device determined by the second sensing device in S801 does not include the third sensing device, and the third sensing device is selected by the fourth sensing device, the step "the second sensing device sends first indication information to the third sensing device" in S802 may be replaced with that the fourth sensing device sends the first indication information to the third sensing device, and correspondingly, the third sensing device receives the first indication information from the fourth sensing device.

In S801, the second sensing device determines the target sensing device. If the target sensing device includes the fourth sensing device, the second sensing device may send second indication information to the fourth sensing device, and the second indication information may indicate the fourth sensing device to sense the target object. If the target sensing device determined by the second sensing device in S801 does not include the fourth sensing device, and the fourth sensing device is selected by the third sensing device, the step "the second sensing device sends second indication information to the fourth sensing device" in S802 may be replaced with that the third sensing device sends the second indication information to the fourth sensing device, and correspondingly, the fourth sensing device receives the second indication information from the third sensing device.

Optionally, the method may further include S803: The third sensing device and the fourth sensing device sense the target object. For details of the process, refer to content of S603 in the embodiment shown in FIG. 6, where the SF is replaced with the second sensing device.

Optionally, a parameter that is of the target object and that is determined by the SF or the second sensing device may further include a movement trajectory of the target object, so that the SF or the second sensing device can continue to determine whether the target object is located within a sensing area of the initial sensing device, or determine whether the target object has moved out of a sensing area of the target sensing device. If the target object has moved out of or is about to move out of a sensing area of the third sensing device and/or a sensing area of the fourth sensing device, a device configured to sense the target object may be reselected. For a reselection process, refer to a process of selecting the target sensing device in any one of the embodiment shown in FIG. 6, FIG. 7, or FIG. 8, or FIG. 9 or FIG. 10 to be described in the following.

In this embodiment of this application, when the target object changes from the first location to the second location, the target object may have left or is about to leave the sensing area of the original sensing device (the first sensing device and/or the second sensing device). In this case, the SF may determine the new sensing device, namely, the target sensing device, based on a new location (the second location) of the target object, so that the target sensing device can continue to sense the target object. In this way, even if the target object moves, in this embodiment of this application, the target object can still be continuously sensed, so that a probability of sensing interruption is reduced, information about the target object can be obtained in time, and continuity and a success rate of sensing the target object are improved. In addition, in this embodiment of this application, participation of a core network device (for example, the SF) is reduced, and the sensing device selects the sensing device, so that selection efficiency can be improved.

In the embodiment shown in FIG. 8, when the location of the target object changes, the receive side of the original sensing device may reselect the sensing device. In addition, an embodiment of this application provides a sixth communication method. In the method, an original sensing signal transmit side may reselect a sensing device. FIG. 9 is a flowchart of the method.

S901: When a target object moves from a first location to a second location, a second sensing device sends a third request to a first sensing device, and correspondingly, the first sensing device receives the third request from the second sensing device. The third request may be used to request (or trigger) the first sensing device to determine a target sensing device, and the third request may include information about a second location of a target object.

The target sensing device includes a third sensing device and/or a fourth sensing device. The fourth sensing device is a new sensing signal transmit side, and the fourth sensing device is a new sensing signal receive side. The second location is located within a sensing area of the target sensing device. That is, when the target object moves from the first location to the second location, the second sensing device may trigger the first sensing device to determine a new sensing device. The third sensing device may be configured to replace an original sensing signal transmit side (for example, the first sensing device), and the fourth sensing device may be configured to replace an original sensing signal receive side (for example, the second sensing device). Optionally, the third request may further indicate a role of the target sensing device determined by the first sensing device, for example, indicate the first sensing device to determine the sensing signal transmit side and/or the sensing signal receive side.

Before S901, the first sensing device sends a first sensing signal to the target object, where a signal reflected or refracted by the target object after the first sensing signal arrives at the target object is a second signal, and the second sensing device receives the second signal (that is, the first sensing signal is used by the second sensing device and the first sensing device to sense the target object). It may be understood that before the first sensing signal is sent, the target object is located at the first location, or the first sensing device and/or the second sensing device consider/considers that the target object is located at the first location.

The second sensing device may determine, in the manner described in S801, that the target object moves from the first location to the second location, and then send the third request to the first sensing device. Optionally, the second sensing device may directly send the third request to the first sensing device, or may send the third request to the first sensing device via an SF or another network device. The SF or the other network device may extract a related parameter (including the information about the second location) from the request sent by the first sensing device, and then re-encapsulate the related parameter into a request sent to the first sensing device.

Before S901, the first sensing device sends the first sensing signal to the target object, where a signal that is reflected or refracted by the target object after the first sensing signal arrives at the target object is the second signal, and the second sensing device receives the second signal.

S902: The first sensing device determines the target sensing device based on the second location.

For example, if the third request includes the information about the second location, the first sensing device may determine, based on the second location and capability information that is of one or more sensing devices and that is stored in the first sensing device, the target sensing device. For example, a sensing area of the target sensing device determined by the first sensing device can cover the second location. For more descriptions of a process in which the first sensing device determines the target sensing device, refer to a process in which one sensing device determines the other sensing device in S503 in the embodiment shown in FIG. 5.

Optionally, the method may further include S903: The first sensing device triggers the target sensing device to sense the target object. The target sensing device includes the third sensing device and/or the fourth sensing device.
1. If the target sensing device includes the third sensing device, optionally, in S903, the first sensing device may send first indication information to the third sensing device. Correspondingly, the third sensing device receives the first indication information from the first sensing device. The first indication information may trigger the third sensing device to sense the target object. For details of the process, refer to the content of the branch 1 of S802 in the embodiment shown in FIG. 8, where the second sensing device is replaced with the first sensing device.

A first parameter indicated by the first indication information may be from the second sensing device, for example, included in the first request, or the first parameter may be determined by the first sensing device. First duration indicated by the first indication information may be from the first request, or the first duration may be determined by the first sensing device.

After receiving the first indication information, the third sensing device may sense the target object. For example, after receiving the first indication information, the third sensing device may start to perform a sensing process, or the third sensing device may wait for specific duration after receiving the first indication information, and then execute the sensing process.

2. If the target sensing device includes the fourth sensing device, optionally, in S903, the first sensing device may send second indication information to the fourth sensing device. Correspondingly, the fourth sensing device receives the second indication information from the first sensing device. The second indication information may trigger the fourth sensing device to sense the target object. For details of the process, refer to the content of the branch 2 of S802 in the embodiment shown in FIG. 8, where the second sensing device is replaced with the first sensing device. S903 in FIG. 9 is an example in which the first sensing device sends the first indication information to the third sensing device and sends the second indication information to the fourth sensing device.

A first parameter indicated by the second indication information may be from the first request, or the first parameter may be determined by the first sensing device. First duration indicated by the second indication information may be from the first request, or the first duration may be determined by the first sensing device.

After receiving the second indication information, the fourth sensing device may sense the target object. For example, after receiving the second indication information, the fourth sensing device may start to perform the sensing process, or the fourth sensing device may wait for specific duration after receiving the second indication information, and then execute the sensing process.

In S901, the first sensing device determines the target sensing device. If the target sensing device includes the third sensing device, and the third sensing device is not the first sensing device, the first sensing device may send the first indication information to the third sensing device, and the first indication information may indicate the third sensing device to sense the target object. If the target sensing device determined by the first sensing device in S901 does not include the third sensing device, and the third sensing device is selected by the fourth sensing device, the step "the first sensing device sends first indication information to the third sensing device" in S902 may be replaced with that the fourth sensing device sends the first indication information to the third sensing device, and correspondingly, the third sensing device receives the first indication information from the fourth sensing device.

In S901, the first sensing device determines the target sensing device. If the target sensing device includes the fourth sensing device, the first sensing device may send the second indication information to the fourth sensing device, and the second indication information may indicate the fourth sensing device to sense the target object. If the target sensing device determined by the first sensing device in S901 does not include the fourth sensing device, and the fourth sensing device is selected by the third sensing device, the step "the first sensing device sends second indication information to the fourth sensing device" in S902 may be replaced with that the third sensing device sends the second indication information to the fourth sensing device, and correspondingly, the fourth sensing device receives the second indication information from the third sensing device.

Optionally, the first sensing device may further send a first response to the second sensing device. The first response may indicate information about the target sensing device determined by the first sensing device, for example, include an identifier of the target sensing device. If the second sensing device receives the first response from the first sensing device, it may also be considered that the second sensing device determines the target sensing device. The first response may be understood as a response to the third request. Optionally, the first sensing device may further send the first response to the second sensing device via the SF or another network device.

Optionally, S903 may not be performed. For example, after receiving the first response, the second sensing device may trigger the target sensing device to sense the target object, that is, the first sensing device does not need to trigger the target sensing device. For a manner in which the second sensing device triggers the target sensing device, refer to S802 in the embodiment shown in FIG. 8.

Optionally, the method may further include S904: The third sensing device and the fourth sensing device sense the target object. For details of the process, refer to the content of S603 in the embodiment shown in FIG. 6, where the SF is replaced with the first sensing device. For details of the process, refer to the content of S803 in the embodiment shown in FIG. 8, where the second sensing device is replaced with the first sensing device.

In this embodiment of this application, when the target object changes from the first location to the second location, the target object may have left or is about to leave the sensing area of the original sensing device (the first sensing device and/or the second sensing device). In this case, the SF may determine the new sensing device, namely, the target sensing device, based on a new location (the second location) of the target object, so that the target sensing device can continue to sense the target object. In this way, even if the target object moves, in this embodiment of this application, the target object can still be continuously sensed, so that a probability of sensing interruption is reduced, information about the target object can be obtained in time, and continuity and a success rate of sensing the target object are improved. In addition, in this embodiment of this application, participation of a core network device (for example, the SF) is reduced, and the sensing device selects the sensing device, so that selection efficiency can be improved.

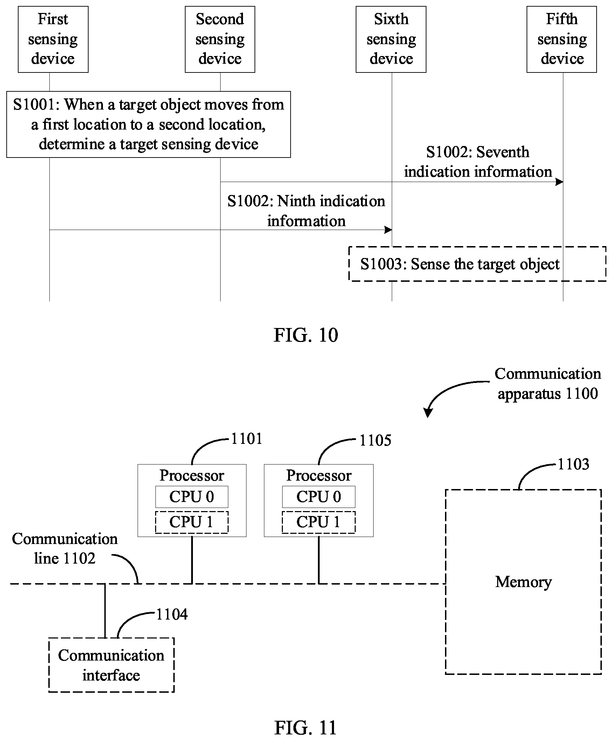

In the embodiment shown in FIG. 8, when the location of the target object changes, the receive side of the original sensing device may reselect the sensing device. In the embodiment shown in FIG. 9, when the location of the target object changes, the transmit side of the original sensing device may reselect the sensing device. In addition, an embodiment of this application provides a seventh communication method. In the method, an original sensing signal transmit side and an original sensing signal receive side may reselect a sensing device. FIG. 10 is a flowchart of the method.

S1001: When a target object moves from a first location to a second location, a first sensing device and a second sensing device determine a target sensing device.

For example, in S1001, the second sensing device determines a fifth sensing device, and the second sensing device sends a third request to the first sensing device. Correspondingly, the first sensing device receives the third request from the second sensing device. The third request may be used to request the first sensing device to determine a sixth sensing device, and the third request may include information about the second location.

The target sensing device includes the fifth sensing device and the sixth sensing device. The fifth sensing device is the third sensing device described in any one of the foregoing embodiments (or the fifth sensing device is a sensing signal transmit side), and the sixth sensing device is the fourth sensing device described in any one of the foregoing embodiments (or the sixth sensing device is a sensing signal receive side); or the sixth sensing device is the third sensing device described in any one of the foregoing embodiments (or the sixth sensing device is the sensing signal transmit side), and the fifth sensing device is the fourth sensing device described in any one of the foregoing embodiments (or the fifth sensing device is the sensing signal receive side). That is, in this embodiment of this application, it may be considered that the target sensing device includes the third sensing device and the fourth sensing device, and the third sensing device is not the first sensing device, and the fourth sensing device is not the second sensing device.

That is, when the target object moves from the first location to the second location, the second sensing device may trigger the first sensing device to determine a new sensing device, and the second sensing device may also determine a new sensing device. Optionally, the third request may further indicate a role of the target sensing device determined by the first sensing device, for example, indicate the first sensing device to determine the sensing signal transmit side or the sensing signal receive side.

Optionally, if the second sensing device determines a parameter of the target object, S1001 may be performed. For example, the second sensing device may determine a movement trajectory of the target object based on the second location. In this case, the movement trajectory (or the second location) is located within a sensing area of the target sensing device, and the second sensing device and the first sensing device determine the target sensing device.

For example, the second sensing device may determine the target sensing device based on the second location and capability information that is of one or more sensing devices and that is stored in the second sensing device. Similarly, the first sensing device may determine the target sensing device based on the second location and the capability information that is of the one or more sensing devices and that is stored in the second sensing device. For this, refer to a process in which one sensing device determines the other sensing device in S503 in the embodiment shown in FIG. 5.

In this embodiment of this application, both the first sensing device and the second sensing device need to determine the new sensing device. Therefore, in this embodiment of this application, an example in which the target object has moved out of or is about to move out of a sensing area of the first sensing device, and the target object has moved out of or is expected to move out of a sensing area of the second sensing device is used.

S1002: The original sensing device triggers the target sensing device to sense the target object.

The original sensing device is, for example, the first sensing device. For example, the first sensing device determines the sixth sensing device, and the first sensing device may trigger the sixth sensing device to sense the target object. In addition, the second sensing device determines the fifth sensing device, and the second sensing device may send information about the fifth sensing device to the first sensing device. In this case, the first sensing device may further trigger the fifth sensing device to sense the target object.

Alternatively, the original sensing device is, for example, the second sensing device. For example, the second sensing device determines the fifth sensing device, and the second sensing device may trigger the fifth sensing device to sense the target object. In addition, the first sensing device determines the sixth sensing device, and the first sensing device may send information about the sixth sensing device to the second sensing device. In this case, the second sensing device may further trigger the sixth sensing device to sense the target object.

Alternatively, original sensing devices are, for example, the first sensing device and the second sensing device. For example, the first sensing device determines the sixth sensing device, and the first sensing device may trigger the sixth sensing device to sense the target object. In addition, the second sensing device determines the fifth sensing device, and the second sensing device may trigger the fifth sensing device to sense the target object.

For example, if the second sensing device determines that the target object is about to move out of or has moved out of the sensing area of the first sensing device, the second sensing device may determine the fifth sensing device, and may trigger the first sensing device to determine a new sensing device. For example, the first sensing device determines the sixth sensing device.

The original sensing device needs to trigger the target sensing device to sense the target object. For example, in a triggering manner, the original sensing device sends indication information to the target sensing device, where the indication information is used to trigger the target sensing device to sense the target object.

For example, if the target sensing device includes the fifth sensing device, the original sensing device may send seventh indication information to the fifth sensing device, where the seventh indication information may trigger the fifth sensing device to sense the target object. Optionally, the seventh indication information may indicate one or more of the following: the fifth sensing device being a sensing signal transmit side, an identifier of the sixth sensing device, the sixth sensing device being a sensing signal receive side, the second location, a first parameter, or first duration. Alternatively, the seventh indication information may indicate one or more of the following: the fifth sensing device being a sensing signal receive side, an identifier of the sixth sensing device, the sixth sensing device being a sensing signal transmit side, the second location, a first parameter, or first duration. For descriptions of these items, refer to any one of the foregoing embodiments.

After receiving the seventh indication information, the fifth sensing device may sense the target object. For example, after receiving the seventh indication information, the fifth sensing device may start to perform a sensing process, or the fifth sensing device may wait for specific duration after receiving the seventh indication information, and then execute the sensing process.

If the seventh indication information received by the fifth sensing device indicates the fifth sensing device being a sensing signal transmit side, and/or indicates the sixth sensing device being a sensing signal receive side, the fifth sensing device can determine a role of the fifth sensing device in the sensing process, that is, the fifth sensing device can determine that the fifth sensing device serves as the sensing signal transmit side. Alternatively, if the seventh indication information neither indicates the fifth sensing device being a sensing signal transmit side nor indicates the sixth sensing device being a sensing signal receive side, it is equivalent that the original sensing device does not indicate the role of the fifth sensing device. In this case, the fifth sensing device may determine the role of the fifth sensing device. For example, the fifth sensing device may determine the fifth sensing device being a sensing signal transmit side or the sensing signal receive side. In this embodiment of this application, an example in which the fifth sensing device is the sensing signal transmit side is used. In the sensing process, the fifth sensing device may send a sensing signal to the target object located at the second location. After arriving at the target object, the sensing signal is reflected or refracted by the target object. A reflected or refracted signal (also referred to as a sensing signal) arrives at the sixth sensing device. The sixth sensing device may obtain sensing information based on the sensing signal, and may determine the parameter of the target object based on the sensing information.

Alternatively, if the seventh indication information received by the fifth sensing device indicates the fifth sensing device being a sensing signal receive side, and/or indicates the sixth sensing device being a sensing signal transmit side, the fifth sensing device can determine the role of the fifth sensing device in the sensing process, that is, the fifth sensing device can determine that the fifth sensing device serves as the sensing signal receive side. Alternatively, if the seventh indication information neither indicates the fifth sensing device being a sensing signal receive side nor indicates the sixth sensing device being a sensing signal transmit side, it is equivalent that the original sensing device does not indicate the role of the fifth sensing device. In this case, the fifth sensing device may determine the role of the fifth sensing device. For example, the fifth sensing device may determine the fifth sensing device being a sensing signal transmit side or the sensing signal receive side. In this embodiment of this application, an example in which the fifth sensing device is the sensing signal transmit side is still used.

The seventh indication information received by the fifth sensing device may indicate the sixth sensing device, for example, indicate the identifier of the sixth sensing device, and/or indicate the sixth sensing device being a sensing signal receive side or the sensing signal transmit side. Alternatively, the seventh indication information may not indicate the sixth sensing device. For example, if the target sensing device selected by the original sensing device includes the fifth sensing device but does not include the sixth sensing device, the seventh indication information does not indicate the sixth sensing device. In this case, optionally, the fifth sensing device may select the other sensing device in the current sensing process. For example, the fifth sensing device may select the sensing device based on the capability information of the one or more sensing devices. For example, the fifth sensing device selects the sixth sensing device. For more details, refer to the process of selecting the other sensing device by the first sensing device in the embodiment shown in FIG. 5.

For example, if the target sensing device includes the sixth sensing device, the original sensing device may send ninth indication information to the sixth sensing device, and the ninth indication information may trigger the sixth sensing device to sense the target object. Optionally, the ninth indication information may indicate one or more of the following: the sixth sensing device being a sensing signal receive side, an identifier of the fifth sensing device, the fifth sensing device being a sensing signal transmit side, the second location, the first parameter, or the first duration. Alternatively, the ninth indication information may indicate one or more of the following: the sixth sensing device being a sensing signal transmit side, an identifier of the fifth sensing device, the fifth sensing device being a sensing signal receive side, the second location, the first parameter, or the first duration. For descriptions of these items, refer to any one of the foregoing embodiments.

After receiving the ninth indication information, the sixth sensing device may also sense the target object. For example, after receiving the ninth indication information, the sixth sensing device may start to perform the sensing process, or the sixth sensing device may wait for specific duration after receiving the ninth indication information, and then execute the sensing process. In S1002 in FIG. 10, an example in which the second sensing device sends the seventh indication information to the fifth sensing device and the first sensing device sends the ninth indication information to the sixth sensing device is used.

If the ninth indication information received by the sixth sensing device indicates the sixth sensing device being a sensing signal receive side, and/or indicates the fifth sensing device being a sensing signal transmit side, the sixth sensing device can determine a role of the sixth sensing device in the sensing process, that is, the sixth sensing device can determine that the sixth sensing device serves as the sensing signal receive side. Alternatively, if the ninth indication information neither indicates the sixth sensing device being a sensing signal receive side nor indicates the fifth sensing device being a sensing signal transmit side, it is equivalent that the original sensing device does not indicate the role of the sixth sensing device. In this case, the sixth sensing device may determine the role of the sixth sensing device. For example, the sixth sensing device may determine the sixth sensing device being a sensing signal transmit side or the sensing signal receive side. In this embodiment of this application, an example in which the sixth sensing device is the sensing signal receive side is used. In the sensing process, the fifth sensing device may send the sensing signal to the target object located at the second location. After arriving at the target object, the sensing signal is reflected or refracted by the target object. The reflected or refracted signal (also referred to as the sensing signal) arrives at the sixth sensing device. The sixth sensing device may obtain the sensing information based on the sensing signal, and may determine the parameter of the target object based on the sensing information.

Alternatively, if the ninth indication information received by the sixth sensing device indicates the sixth sensing device being a sensing signal transmit side, and/or indicates the fifth sensing device being a sensing signal receive side, the sixth sensing device can determine the role of the sixth sensing device in the sensing process, that is, the sixth sensing device can determine that the sixth sensing device serves as the sensing signal transmit side. Alternatively, if the ninth indication information neither indicates the sixth sensing device being a sensing signal transmit side nor indicates the fifth sensing device being a sensing signal receive side, it is equivalent that the original sensing device does not indicate the role of the sixth sensing device. In this case, the sixth sensing device may determine the role of the sixth sensing device. For example, the sixth sensing device may determine the sixth sensing device being a sensing signal transmit side or the sensing signal receive side. In this embodiment of this application, an example in which the sixth sensing device is the sensing signal receive side is still used.

The ninth indication information received by the sixth sensing device may indicate the fifth sensing device, for example, indicate the identifier of the fifth sensing device, and/or indicate the fifth sensing device being a sensing signal transmit side or the sensing signal receive side. Alternatively, the ninth indication information may not indicate the fifth sensing device. For example, if the initial sensing device selected by the original sensing device includes the sixth sensing device but does not include the fifth sensing device, the ninth indication information does not indicate the fifth sensing device. In this case, optionally, the sixth sensing device may select the other sensing device in the current sensing process. For example, the sixth sensing device may select the sensing device based on the capability information of the one or more sensing devices. For example, the sixth sensing device selects the fifth sensing device. For more details, refer to the foregoing process of selecting the other sensing device by the second sensing device.

Optionally, the method further includes S1003. The fifth sensing device and the sixth sensing device sense the target object. For more descriptions of S1003, refer to related descriptions of the embodiment shown in any one of FIG. 6 to FIG. 9.

In this embodiment of this application, when the target object changes from the first location to the second location, the target object may have left or is about to leave the sensing area of the original sensing device (the first sensing device and/or the second sensing device). In this case, the SF may determine the new sensing device, namely, the target sensing device, based on a new location (the second location) of the target object, so that the target sensing device can continue to sense the target object. In this way, even if the target object moves, in this embodiment of this application, the target object can still be continuously sensed, so that a probability of sensing interruption is reduced, information about the target object can be obtained in time, and continuity and a success rate of sensing the target object are improved. In addition, in this embodiment of this application, participation of a core network device (for example, the SF) is reduced, and the sensing device selects the sensing device, so that selection efficiency can be improved.

It may be understood that, in the process shown in the embodiment in FIG. 4 or FIG. 5, after the SF determines the initial sensing device and the initial sensing device senses the target object, the target object may move. The target sensing device may be determined in a manner shown in any one of the embodiments in FIG. 6 to FIG. 10, to avoid sensing interruption. Alternatively, after the target sensing device is determined in the manner shown in any one of the embodiments in FIG. 6 to FIG. 10, the target object moves again, and the target sensing device is re-determined in the manner shown in any one of the embodiments in FIG. 6 to FIG. 10, to avoid sensing interruption. For example, when the target object moves to the second location, the target sensing device is determined in the manner provided in the embodiment shown in FIG. 6. When the target object continues to move to a third location, the target sensing device is determined in the manner provided in the embodiment shown in FIG. 8. This is not limited in embodiments of this application.

FIG. 11 is a diagram of a structure of a communication apparatus according to an embodiment of this application. The communication apparatus 1100 may be the SF in the embodiment shown in any one of FIG. 4 to FIG. 10 or a circuit system of the SF, and is configured to implement the method corresponding to the SF in the foregoing method embodiments. Alternatively, the communication apparatus 1100 may be the first sensing device in the embodiment shown in any one of FIG. 4 to FIG. 10 or a circuit system of the first sensing device, and is configured to implement the method corresponding to the first sensing device in the foregoing method embodiments. Alternatively, the communication apparatus 1100 may be the second sensing device in the embodiment shown in any one of FIG. 4 to FIG. 10 or a circuit system of the second sensing device, and is configured to implement the method corresponding to the second sensing device in the foregoing method embodiments. For example, a circuit system is a chip system.

The communication apparatus 1100 includes at least one processor 1101. The processor 1101 may be configured for internal processing of the apparatus to implement a specific control processing function. Optionally, the processor 1101 includes instructions. Optionally, the processor 1101 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1100 includes one or more memories 1103, configured to store instructions. Optionally, the memory 1103 may further store data. The processor and the memory may be separately disposed, or may be integrated together.

Optionally, the communication apparatus 1100 includes a communication line 1102 and at least one communication interface 1104. The memory 1103, the communication line 1102, and the communication interface 1104 are all optional, and therefore are all represented by dashed lines in FIG. 11.

Optionally, the communication apparatus 1100 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1100 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1101 may include a general-purpose central processing unit (central processing unit, CPU), a microprocessor, an application specific integrated circuit (application specific integrated circuit, ASIC), or one or more integrated circuits configured to control program execution of solutions of this application.

The communication line 1102 may include a channel for transmitting information between the foregoing components.

The communication interface 1104 is configured to communicate, via any apparatus like a transceiver, with another device or a communication network, like an Ethernet network, a radio access network (radio access network, RAN), a wireless local area network (wireless local area networks, WLAN), or a wired access network.

The memory 1103 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile optical disc, a Blu-ray optical disc, or the like), a magnetic disk storage medium or another magnetic storage device, or any other medium capable of carrying or storing expected program code in a form of instructions or data structures and capable of being accessed by a computer, but is not limited thereto. The memory 1103 may exist independently, and is connected to the processor 1101 through the communication line 1102. Alternatively, the memory 1103 may be integrated with the processor 1101.

The memory 1103 is configured to store computer-executable instructions for executing the solutions of this application, and the processor 1101 controls the execution. The processor 1101 is configured to execute computer-executable instruction stored in the memory 1103, to implement the steps performed by the SF, the first sensing device, or the second sensing device in the embodiment shown in any one of FIG. 4 to FIG. 10.

Optionally, the computer-executable instructions in this embodiment of this application may also be referred to as application program code. This is not specifically limited in this embodiment of this application.

In specific implementation, in an embodiment, the processor 1101 may include one or more CPUs, for example, a CPU 0 and a CPU 1 in FIG. 11.

In specific implementation, in an embodiment, the communication apparatus 1100 may include a plurality of processors, for example, the processor 1101 and a processor 1105 in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 11 is a chip, for example, a chip of the SF, a chip of the first sensing device, or a chip of the second sensing device, the chip includes a processor 1101 (which may further include a processor 1105), a communication line 1102, and a communication interface 1104. Optionally, the chip may include a memory 1103. Specifically, the communication interface 1104 may be an input interface, a pin, a circuit, or the like. The memory 1103 may be a register, a cache, or the like. The processor 1101 and the processor 1105 each may be a general-purpose CPU, a microprocessor, an ASIC, or one or more integrated circuits configured to control program execution of the communication method in any one of the foregoing embodiments.

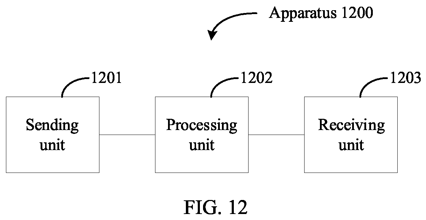

**In** embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In actual implementation, another division manner may be used. For example, when each function module is obtained through division based on each corresponding function, FIG. 12 is a diagram of an apparatus. The apparatus 1200 may be the SF, the first sensing device, or the second sensing device in the foregoing method embodiments, or the apparatus 1200 may be a chip in the SF, a chip in the first sensing device, or a chip in the second sensing device in the foregoing method embodiments. The apparatus 1200 includes a sending unit 1201, a processing unit 1202, and a receiving unit 1203.

It should be understood that the apparatus 1200 may be configured to implement the steps performed by the SF, the first sensing device, or the second sensing device in the communication method in embodiments of this application. For related features, refer to the embodiment shown in any one of FIG. 4 to FIG. 10. Details are not described herein again.

Optionally, functions/implementation processes of the sending unit 1201, the receiving unit 1203, and the processing unit 1202 in FIG. 12 may be implemented by the processor 1101 in FIG. 11 by invoking the computer-executable instructions stored in the memory 1103. Alternatively, functions/implementation processes of the processing unit 1202 in FIG. 12 may be implemented by the processor 1101 in FIG. 11 by invoking the computer-executable instructions stored in the memory 1103, and functions/implementation processes of the sending unit 1201 and the receiving unit 1203 in FIG. 12 may be implemented by the communication interface 1104 in FIG. 11.

Optionally, when the apparatus 1200 is a chip or a circuit, functions/implementation processes of the sending unit 1201 and the receiving unit 1203 may alternatively be implemented by a pin, a circuit, or the like.

This application further provides a computer-readable storage medium. The computer-readable storage medium stores a computer program or instructions. When the computer program or the instructions are run, the method performed by the SF, the first sensing device, or the second sensing device in the foregoing method embodiments is implemented. In this way, the functions in the foregoing embodiments may be implemented in a form of software functional unit and sold or used as an independent product. Based on such an understanding, the technical solutions of this application essentially, or the part contributing to conventional technologies, or a part of the technical solutions may be implemented in a form of software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the SF, the first sensing device, or the second sensing device in any one of the foregoing method embodiments.

An embodiment of this application further provides a processing apparatus, including a processor and an interface. The processor is configured to perform the method performed by the SF, the first sensing device, or the second sensing device in any one of the foregoing method embodiments.

All or a part of the foregoing embodiments may be implemented by using software, hardware, firmware, or any combination thereof. When software is used to implement embodiments, all or a part of embodiments may be implemented in a form of computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of compute apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor can read information from the storage medium and write information into the storage medium. Alternatively, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that in embodiments of this application, one or more of the SF, the first sensing device, or the second sensing device may perform a part or all of the steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, applied to a first core network device, wherein the method comprises:
determining, based on a first location at which a target object is located, a first sensing device and a second sensing device to sense the target object, wherein the first sensing device is a sensing signal transmit side, and the second sensing device is a sensing signal receive side;
when the target object moves from the first location to a second location, determining a target sensing device based on the second location, wherein the target sensing device comprises a third sensing device and/or a fourth sensing device, the third sensing device is a new sensing signal transmit side, and the fourth sensing device is a new sensing signal receive side; and
triggering the target sensing device to sense the target object.

2. The method according to claim 1, wherein
the first location is located within a sensing range of the first sensing device and/or a sensing range of the second sensing device.

3. The method according to claim 1 or 2, wherein
the second location is located within a sensing range of the target sensing device.

4. The method according to any one of claims 1 to 3, wherein the method further comprises:
receiving sensing information of the target object from the second sensing device; and
determining the second location based on the sensing information.

5. The method according to any one of claims 1 to 4, wherein triggering the target sensing device to sense the target object comprises:
when the target sensing device comprises the third sensing device, sending first indication information to the third sensing device, wherein the first indication information is used to trigger the target sensing device to sense the target object, and the first indication information indicates one or more of the following: the third sensing device being a sensing signal transmit side, an identifier of the fourth sensing device, the fourth sensing device being a sensing signal receive side, or the second location; or
when the target sensing device comprises the third sensing device, sending first indication information to the third sensing device, wherein the first indication information is used to trigger the target sensing device to sense the target object, and the first indication information indicates one or more of the following: the third sensing device being a sensing signal transmit side, an identifier of the second sensing device, the second sensing device being a sensing signal receive side, or the second location; or
when the target sensing device comprises the third sensing device, sending first indication information to the third sensing device, wherein the first indication information is used to trigger the target sensing device to sense the target object, and the first indication information indicates one or more of the following: the third sensing device being a sensing signal transmit side, an identifier of the first sensing device, the first sensing device being a sensing signal receive side, or the second location.

6. The method according to any one of claims 1 to 5, wherein triggering the target sensing device to sense the target object comprises:
when the target sensing device comprises the fourth sensing device, sending second indication information to the fourth sensing device, wherein the second indication information is used to trigger the target sensing device to sense the target object, and the second indication information indicates one or more of the following: the fourth sensing device being a sensing signal receive side, an identifier of the third sensing device, the third sensing device being a sensing signal transmit side, or the second location; or
when the target sensing device comprises the fourth sensing device, sending second indication information to the fourth sensing device, wherein the second indication information is used to trigger the target sensing device to sense the target object, and the second indication information indicates one or more of the following: the fourth sensing device being a sensing signal receive side, the identifier of the first sensing device, the first sensing device being a sensing signal transmit side, or the second location; or
when the target sensing device comprises the fourth sensing device, sending second indication information to the fourth sensing device, wherein the second indication information is used to trigger the target sensing device to sense the target object, and the second indication information indicates one or more of the following: the fourth sensing device being a sensing signal receive side, the identifier of the second sensing device, the second sensing device being a sensing signal transmit side, or the second location.

7. The method according to any one of claims 1 to 6, wherein determining the target sensing device based on the second location comprises:
sending a first request to a second core network device, wherein the first request is used to request information about a sensing device, and the first request comprises information about the second location; and receiving a first response from the second core network device, wherein the first response comprises information about the target sensing device; or
determining the target sensing device based on the second location and capability information that is of at least one sensing device and that is stored in the first core network device, wherein the at least one sensing device comprises the target sensing device.

8. The method according to any one of claims 1 to 7, wherein the method further comprises:
receiving capability information of at least one sensing device, wherein capability information of one sensing device in the at least one sensing device indicates one or more of the following: a location of the sensing device, a sensing area of the sensing device, a parameter that is capable of being sensed by the sensing device, or information indicating that the sensing device is capable of serving as the sensing signal transmit side and/or the sensing signal receive side; and
the at least one sensing device comprises the third sensing device and the fourth sensing device.

9. The method according to any one of claims 1 to 8, wherein determining the target sensing device based on the second location comprises:
determining the target sensing device based on a movement trajectory of the target object, wherein the target object is currently located at the second location in the movement trajectory.

10. The method according to any one of claims 1 to 9, wherein the method further comprises:
receiving a second request from an application server, wherein the second request is used to request to sense the target object, and the second request comprises information about the first location.

11. The method according to any one of claims 1 to 10, wherein
when the target sensing device comprises the fourth sensing device, the method further comprises: triggering the second sensing device to sense the target object, wherein the second sensing device is updated from the sensing signal receive side to the sensing signal transmit side; or
when the target sensing device comprises the third sensing device, the method further comprises: triggering the first sensing device to sense the target object, wherein the first sensing device is updated from the sensing signal transmit side to the sensing signal receive side.

12. The method according to any one of claims 1 to 11, wherein when the target sensing device comprises the fourth sensing device, the method further comprises:
sending tenth indication information to the first sensing device, wherein the tenth indication information indicates one or more of the following: the second location, the identifier of the fourth sensing device, the first sensing device being a sensing signal transmit side, or the fourth sensing device being a sensing signal receive side.

13. The method according to any one of claims 1 to 11, wherein when the target sensing device comprises the third sensing device, the method further comprises:
sending eighth indication information to the second sensing device, wherein the eighth indication information indicates one or more of the following: the second location, the identifier of the third sensing device, the third sensing device being a sensing signal transmit side, or the second sensing device being a sensing signal receive side.

14. The method according to any one of claims 1 to 10, wherein the method further comprises:
sending third indication information to the first sensing device and/or the second sensing device, wherein the third indication information indicates to stop sensing the target object.

15. A communication method, applied to a first sensing device, wherein the method comprises:
sending a first sensing signal to a target object located at a first location, wherein the first sensing signal is used by the first sensing device and a second sensing device to sense the target object, the first sensing device is a sensing signal transmit side, and the second sensing device is a sensing signal receive side;
receiving a third request from the second sensing device, wherein the third request is used to trigger the first sensing device to select a target sensing device, and the third request comprises information about a second location of the target object after movement;
determining the target sensing device based on the second location, wherein the target sensing device comprises a third sensing device and/or a fourth sensing device, the third sensing device is a new sensing signal transmit side, and the fourth sensing device is a new sensing signal receive side; and
triggering the target sensing device to sense the target object; or sending a response to the third request to the second sensing device, wherein the response indicates the target sensing device.

16. The method according to claim 15, wherein determining the target sensing device based on the second location comprises:
determining the target sensing device based on the second location and capability information that is of at least one sensing device and that is stored in the first sensing device, wherein the at least one sensing device comprises the target sensing device.

17. The method according to claim 15 or 16, wherein triggering the target sensing device to sense the target object comprises:
when the target sensing device comprises the third sensing device, sending first indication information to the third sensing device, wherein the first indication information is used to trigger the target sensing device to sense the target object, and the first indication information indicates one or more of the following: the third sensing device being a sensing signal transmit side, an identifier of the fourth sensing device, the fourth sensing device being a sensing signal receive side, or the second location; or
when the target sensing device comprises the third sensing device, sending first indication information to the third sensing device, wherein the first indication information is used to trigger the target sensing device to sense the target object, and the first indication information indicates one or more of the following: the third sensing device being a sensing signal transmit side, an identifier of the second sensing device, the second sensing device being a sensing signal receive side, or the second location; or
when the target sensing device comprises the third sensing device, sending first indication information to the third sensing device, wherein the first indication information is used to trigger the target sensing device to sense the target object, and the first indication information indicates one or more of the following: the third sensing device being a sensing signal transmit side, an identifier of the first sensing device, the first sensing device being a sensing signal receive side, or the second location.

18. The method according to any one of claims 15 to 17, wherein triggering the target sensing device to sense the target object comprises:
when the target sensing device comprises the fourth sensing device, sending second indication information to the fourth sensing device, wherein the second indication information is used to trigger the target sensing device to sense the target object, and the second indication information indicates one or more of the following: the fourth sensing device being a sensing signal receive side, an identifier of the third sensing device, the third sensing device being a sensing signal transmit side, or the second location; or
when the target sensing device comprises the fourth sensing device, sending second indication information to the fourth sensing device, wherein the second indication information is used to trigger the target sensing device to sense the target object, and the second indication information indicates one or more of the following: the fourth sensing device being a sensing signal receive side, the identifier of the first sensing device, the first sensing device being a sensing signal transmit side, or the second location; or
when the target sensing device comprises the fourth sensing device, sending second indication information to the fourth sensing device, wherein the second indication information is used to trigger the target sensing device to sense the target object, and the second indication information indicates one or more of the following: the fourth sensing device being a sensing signal receive side, the identifier of the second sensing device, the second sensing device being a sensing signal transmit side, or the second location.

19. The method according to any one of claims 15 to 18, wherein before sending the first sensing signal to the target object located at the first location, the method further comprises:
receiving fourth indication information from a first core network device or the second sensing device, wherein the fourth indication information indicates one or more of the following: the first sensing device being a sensing signal transmit side, the identifier of the second sensing device, the second sensing device being a sensing signal receive side, or the first location.

20. The method according to any one of claims 15 to 19, wherein the method further comprises:
sending capability information of the first sensing device to the first core network device or a second core network device; and/or
sending the capability information of the first sensing device to one or more sensing devices, wherein
the capability information of the first sensing device comprises one or more of the following: information about a location of the first sensing device, information about a sensing area of the first sensing device, information about a parameter that is capable of being sensed by the first sensing device, or information indicating that the first sensing device is capable of serving as the sensing signal transmit side and/or the sensing signal receive side.

21. The method according to any one of claims 15 to 20, wherein the method further comprises:
receiving capability information of at least one sensing device, wherein the at least one sensing device comprises the second sensing device, and capability information of the second sensing device comprises one or more of the following: information about a location of the second sensing device, information about a sensing area of the second sensing device, information about a parameter that is capable of being sensed by the second sensing device, or information indicating that the second sensing device is capable of serving as the sensing signal transmit side and/or the sensing signal receive side.

22. The method according to claim 19 or 20, wherein the first core network device is an SF.

23. The method according to claim 20, wherein the second core network device is an NRF.

24. A communication method, applied to a second sensing device, wherein the method comprises:
receiving a second sensing signal reflected by a target object, wherein the second sensing signal is used by the second sensing device and a first sensing device to sense the target object, the first sensing device is a sensing signal transmit side, and the second sensing device is a sensing signal receive side;
determining, based on the second sensing signal, that the target object moves from a first location to a second location;
determining a target sensing device based on the second location, wherein the target sensing device comprises a third sensing device and/or a fourth sensing device, the third sensing device is a new sensing signal transmit side, and the fourth sensing device is a new sensing signal receive side; and
triggering the target sensing device to sense the target object.

25. The method according to claim 24, wherein triggering the target sensing device to sense the target object comprises:
when the target sensing device comprises the third sensing device, sending first indication information to the third sensing device, wherein the first indication information is used to trigger the target sensing device to sense the target object, and the first indication information indicates one or more of the following: the third sensing device being a sensing signal transmit side, an identifier of the fourth sensing device, the fourth sensing device being a sensing signal receive side, or the second location; or
when the target sensing device comprises the third sensing device, sending first indication information to the third sensing device, wherein the first indication information is used to trigger the target sensing device to sense the target object, and the first indication information indicates one or more of the following: the third sensing device being a sensing signal transmit side, an identifier of the second sensing device, the second sensing device being a sensing signal receive side, or the second location; or
when the target sensing device comprises the third sensing device, sending first indication information to the third sensing device, wherein the first indication information is used to trigger the target sensing device to sense the target object, and the first indication information indicates one or more of the following: the third sensing device being a sensing signal transmit side, an identifier of the first sensing device, the first sensing device being a sensing signal receive side, or the second location.

26. The method according to claim 24 or 25, wherein triggering the target sensing device to sense the target object comprises:
when the target sensing device comprises the fourth sensing device, sending second indication information to the fourth sensing device, wherein the second indication information is used to trigger the target sensing device to sense the target object, and the second indication information indicates one or more of the following: the fourth sensing device being a sensing signal receive side, an identifier of the third sensing device, the third sensing device being a sensing signal transmit side, or the second location; or
when the target sensing device comprises the fourth sensing device, sending second indication information to the fourth sensing device, wherein the second indication information is used to trigger the target sensing device to sense the target object, and the second indication information indicates one or more of the following: the fourth sensing device being a sensing signal receive side, the identifier of the first sensing device, the first sensing device being a sensing signal transmit side, or the second location; or
when the target sensing device comprises the fourth sensing device, sending second indication information to the fourth sensing device, wherein the second indication information is used to trigger the target sensing device to sense the target object, and the second indication information indicates one or more of the following: the fourth sensing device being a sensing signal receive side, the identifier of the second sensing device, the second sensing device being a sensing signal transmit side, or the second location.

27. The method according to any one of claims 24 to 26, wherein before receiving the second sensing signal reflected by the target object, the method further comprises:
receiving sixth indication information from a first core network device or the first sensing device, wherein the sixth indication information indicates one or more of the following: the first sensing device being a sensing signal transmit side, the identifier of the first sensing device, the second sensing device being a sensing signal receive side, or the first location.

28. The method according to claim 27, wherein the sixth indication information is from the first core network device, and the method further comprises:
determining the first sensing device based on the first location and capability information of at least one sensing device; and
sending fourth indication information to the first sensing device, wherein the fourth indication information indicates one or more of the following: the first location, the identifier of the second sensing device, the first sensing device being a sensing signal transmit side, or the second sensing device being a sensing signal receive side.

29. The method according to any one of claims 24 to 28, wherein the method further comprises:
sending capability information of the second sensing device to the first core network device or a second core network device; and/or
sending the capability information of the second sensing device to one or more sensing devices, wherein
the capability information of the second sensing device comprises one or more of the following: information about a location of the second sensing device, information about a sensing area of the second sensing device, information about a parameter that is capable of being sensed by the second sensing device, or information indicating that the second sensing device is capable of serving as the sensing signal transmit side and/or the sensing signal receive side.

30. The method according to any one of claims 24 to 29, wherein the method further comprises:
receiving capability information of at least one sensing device, wherein the at least one sensing device comprises the first sensing device, and capability information of the first sensing device comprises one or more of the following: information about a location of the first sensing device, information about a sensing area of the first sensing device, information about a parameter that is capable of being sensed by the first sensing device, or information indicating that the first sensing device is capable of serving as the sensing signal transmit side and/or the sensing signal receive side.

31. The method according to any one of claims 24 to 30, wherein determining, based on the second sensing signal, that the target object moves from the first location to the second location comprises:
determining a movement trajectory of the target object based on the second sensing signal; and
determining, based on the movement trajectory, that the target object moves from the first location to the second location, wherein the target object is currently located at the second location in the movement trajectory.

32. The method according to any one of claims 24 to 31, wherein determining the target sensing device comprises:
sending sensing information of the target object to the first core network device, wherein the sensing information is determined based on the second sensing signal, and the sensing information is used to determine the movement trajectory of the target object; and
receiving eighth indication information from the first core network device, and determining the target sensing device based on the eighth indication information, wherein
the eighth indication information indicates one or more of the following: the second location, the identifier of the third sensing device, the third sensing device being a sensing signal transmit side, or the second sensing device being a sensing signal receive side.

33. The method according to any one of claims 24 to 32, wherein the method further comprises:
changing the second sensing device from the sensing signal receive side to the sensing signal transmit side, wherein the target sensing device comprises the fourth sensing device and the third sensing device, and the second sensing device is the third sensing device.

34. The method according to any one of claims 24 to 33, wherein determining the target sensing device based on the second location comprises:
sending a third request to the first sensing device, wherein the third request is used to request the first sensing device to select the new sensing signal receive side and/or the new sensing signal transmit side, and the third request comprises information about the second location; and
receiving a first response from the first sensing device, wherein the first response comprises an identifier of the target sensing device.

35. The method according to any one of claim 27, 28, 29, or 32, wherein the first core network device is an SF.

36. The method according to claim 29, wherein the second core network device is an NRF.

37. A communication apparatus, wherein the communication apparatus comprises a processing unit and a transceiver unit, and the processing unit is coupled to the transceiver unit, to perform the method according to any one of claims 1 to 14, or perform the method according to any one of claims 15 to 23, or perform the method according to any one of claims 24 to 36.

38. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 14, or enable the communication apparatus to perform the method according to any one of claims 15 to 23, or enable the communication apparatus to perform the method according to any one of claims 24 to 36.

39. A computer-readable storage medium, wherein the computer-readable storage medium is configured to store a computer program; and when the computer program is run on a computer, the computer is enabled to perform the method according to any one of claims 1 to 14, or the computer is enabled to perform the method according to any one of claims 15 to 23, or the computer is enabled to perform the method according to any one of claims 24 to 36.

40. A computer program product, wherein the computer program product comprises a computer program; and when the computer program is run on a computer, the computer is enabled to perform the method according to any one of claims 1 to 14, or the computer is enabled to perform the method according to any one of claims 15 to 23, or the computer is enabled to perform the method according to any one of claims 24 to 36.

41. A chip system, wherein the chip system comprises:
a processor and an interface, wherein the processor is configured to invoke instructions from the interface and run the instructions, and when the processor executes the instructions, the method according to any one of claims 1 to 14 is implemented, or the method according to any one of claims 15 to 23 is implemented, or the method according to any one of claims 24 to 36 is implemented.

42. A communication system, wherein the communication system comprises a first core network device and a target sensing device, wherein
the first core network device is configured to: determine, based on a first location at which a target object is located, a first sensing device and a second sensing device to sense the target object, wherein the first sensing device is a sensing signal transmit side, and the second sensing device is a sensing signal receive side; when the target object moves from the first location to a second location, determine the target sensing device based on the second location, wherein the target sensing device comprises a third sensing device and/or a fourth sensing device, the third sensing device is a new sensing signal transmit side, and the fourth sensing device is a new sensing signal receive side; and trigger the target sensing device to sense the target object; and
the target sensing device is configured to sense the target object.

43. A communication system, wherein the communication system comprises a first sensing device and a second sensing device, wherein
the first sensing device is configured to send a first sensing signal to a target object located at a first location, wherein the first sensing signal is used by the first sensing device and the second sensing device to sense the target object, the first sensing device is a sensing signal transmit side, and the second sensing device is a sensing signal receive side;
the second sensing device is configured to: receive a second sensing signal reflected by the target object, and determine, based on the second sensing signal, that the target object moves from the first location to a second location; and
option 1: the second sensing device is further configured to determine a target sensing device based on the second location, wherein the target sensing device comprises a third sensing device and/or a fourth sensing device, the third sensing device is a new sensing signal transmit side, and the fourth sensing device is a new sensing signal receive side; and trigger the target sensing device to sense the target object; or
option 2: the second sensing device is further configured to send a third request to the first sensing device, wherein the third request is used to trigger the first sensing device to select a target sensing device, and the third request comprises information about the second location of the target object after movement; and the first sensing device is further configured to: receive the third request from the second sensing device, determine the target sensing device based on the second location, and trigger the target sensing device to sense the target object or send a response to the third request to the second sensing device, wherein the response indicates the target sensing device.
